(19) Europäisches Patentamt
European Patent Office
Office européen des brevets

(11) **EP 1 595 368 B1**

(12) **EUROPEAN PATENT SPECIFICATION**

(45) Date of publication and mention
of the grant of the patent:
**03.01.2007 Bulletin 2007/01**

(21) Application number: **04712105.8**

(22) Date of filing: **18.02.2004**

(51) Int Cl.:
**H04L 12/56** *(2006.01)*     **H04L 12/28** *(2006.01)*

(86) International application number:
**PCT/GB2004/000649**

(87) International publication number:
**WO 2004/075569 (02.09.2004 Gazette 2004/36)**

(54) **PACKET SCHEDULING**

ABLAUFSTEUERUNG FÜR PAKETE

ORDONNANCEMENT DE PAQUETS

(84) Designated Contracting States:
**DE FR GB**

(30) Priority: **19.02.2003 GB 0303859**
**16.04.2003 GB 0308931**

(43) Date of publication of application:
**16.11.2005 Bulletin 2005/46**

(73) Proprietor: **FUJITSU LIMITED**
**Kawasaki-shi,**
**Kanagawa 211-8588 (JP)**

(72) Inventor: **Abedi, Saied**
**Berkshire RG1 4LY (GB)**

(74) Representative: **Hitching, Peter Matthew**
**HASELTINE LAKE**
**Imperial House**
**15-19 Kingsway**
**London WC2B 6UD (GB)**

(56) References cited:
**EP-A- 1 130 872**     **US-A1- 2002 176 380**
**US-A1- 2003 096 597**     **US-B1- 6 493 331**

## Description

The present invention relates to packet scheduling methods and apparatus for use, for example, in wireless communication systems.

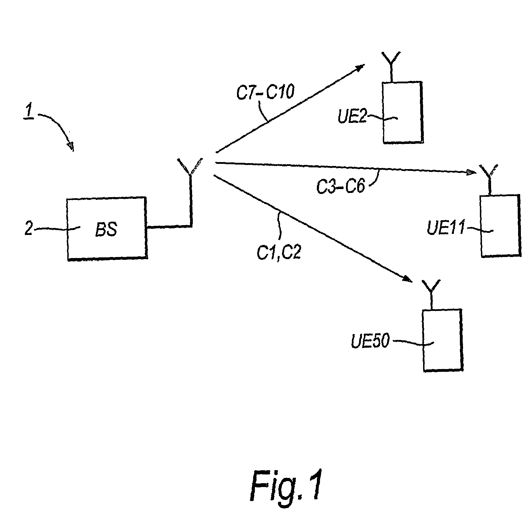

Fig. 1 shows parts of a wireless communication system 1. The system includes a plurality of base stations 2, only one of which is shown in Fig. 1. The base station 2 serves a cell in which a plurality of individual users may be located. Each user has an individual user equipment (UE). Only the user equipments UE2, UE11 and UE50 are shown in Fig. 1. Each UE is, for example, a portable terminal (handset) or portable computer.

As is well known, in a code-division multiple access (CDMA) system the signals transmitted to different UEs from the base station (also known as "node B") are distinguished by using different channelisation codes. In so-called third generation wireless communication systems a high speed downlink packet access (HSDPA) technique has been proposed for transmitting data in the downlink direction (from the base station to the UEs). In this technique a plurality of channels are available for transmitting the data. These channels have different channelisation codes. For example, there may be ten different channels C1 to C10 available for HSDPA in a given cell or sector of a cell. In HSDPA, downlink transmissions are divided up into a series of transmission time intervals (TTI), and a packet of data is transmitted on each different available channel to a selected UE. A new choice of which UE is served by which channel can be made in each TTI.

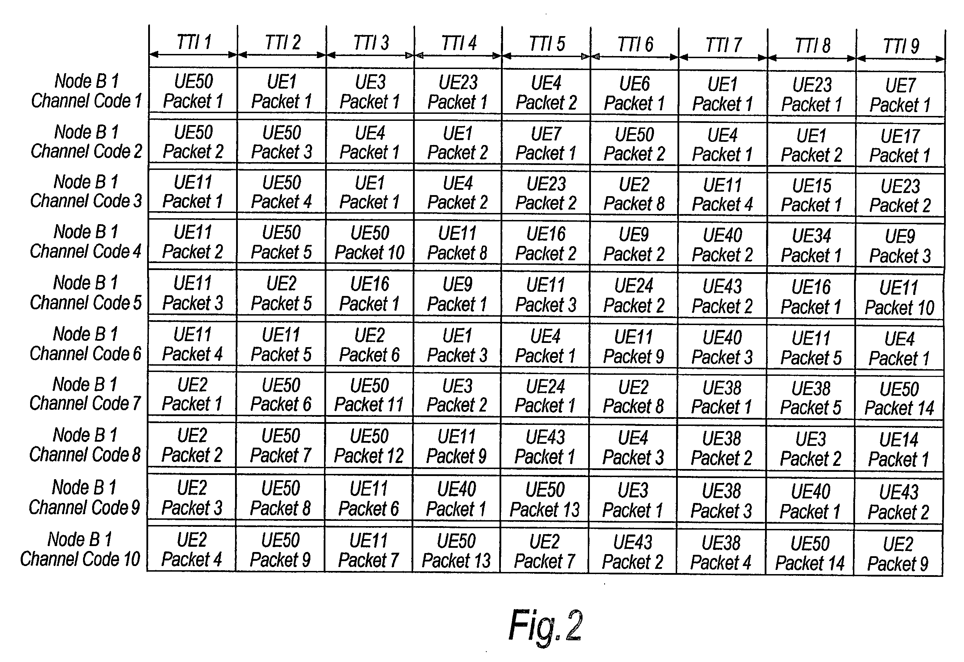

Fig. 2 shows an example of the operation of the HSDPA technique over a series of transmission time intervals TTI1 to TTI9. As shown in Fig. 2, in TTI1 it is determined that two packets will be sent to UE50, four packets will be sent to UE11 and four packets will be sent to UE2. Accordingly, two channels are allocated to UE50 and four channels each are allocated to UE11 and UE2. Thus, as shown in Fig. 1, UE50 is allocated channels C1 and C2, UE11 is allocated channels C3 to C6, and UE2 is allocated channels C7 to C10.

In the next transmission time interval TTI2 a new user equipment UE1 is sent one packet, and the remaining UEs specified in TTI1 continue to receive packets.

Thus, effectively the HSDPA system employs a number of parallel shared channels to transmit data in packet form from the base station to the different UEs. This system is expected to be used, for example, to support world wide web (WWW) browsing.

In order to decide which UE should be served on which channel in each TTI a packet scheduling technique is employed. Conventionally, two basic types of scheduling technique have been considered for use in HSDPA: a round-robin (RR) scheduling technique and a maximum carrier-to-interference ratio (max C/I) technique.

The basic round-robin technique first compiles a list of the UEs which currently have data waiting at the transmitter (base station) for transmission. For each TTI the last UE in the list will have the highest priority for the next TTI. Accordingly, the UEs are serviced in a round robin fashion. In the simplest round-robin scheduling technique, it is assumed that the UE with the highest priority takes all of the channels. However, a packet-weighted round-robin technique is also known. This allocates the available channels to a group of users in each TTI based on the relative amounts of data for the different UEs. In this packet-weighted technique UEs which have more data waiting for transmission are allocated more channels.

The round-robin scheduling techniques emphasise fairness amongst the competing UEs in terms of radio resource allocation. However, they tend to provide relatively poor total throughput of data.

The max C/I scheduling technique is similar to the round-robin scheduling technique except that the list of UEs having waiting data is sorted in each TTI based on a carrier-to-interference ratio (C/I) reported by each UE. The C/I is a measure of the quality of the channel. By sorting the list of UEs based on C/I, UEs which have a better channel quality are given a higher chance to be selected. In the simplest version of the technique, all of the channels are allocated to the UE with waiting data that has the highest C/I. A packet-weighted variant is also possible, in which instead of selecting a single UE having the highest C/I, a group of UEs with the highest C/I values is selected, and the available channels are divided up amongst the group of UEs based on the relative amounts of data which those UEs have waiting for transmission.

The max C/I scheduling technique tends to maximise the total throughput of data but this is at the expense of fairness. It can be seen that UEs which report poor C/I values, for example because they are far from the base station or because there are many other interfering UEs in the vicinity, will only very rarely be selected. Thus, these UEs are likely to suffer from unacceptably long delays in receiving packets.

Another scheduling technique is disclosed in "A proposal of all-IP mobile wireless network architecture (3) - QoS packet scheduler for base stations", Masahiro Ono et al, NEC Corporation, Technical Report of IEICE, MoMuC2002-3 (2002-05), pp.13-18. This packet scheduling technique aims to meet quality of service (QoS) requirements of different UEs and to maximise the system capacity by adaptively allocating time-slots according to the wireless link quality and the required QoS levels. The technique employs a hierarchy of different individual schedulers including a max C/I scheduler, a proportional fairness (PF) scheduler, a weighted round robin (WRR) scheduler and a priority round robin (PRR) scheduler. Packets to be scheduled are pre-classified by a classifier according to the different QoS requirements of the different UEs. Packets belonging to different classes are then applied to different schedulers in the first level of schedulers in the hierarchy. Further scheduling is carried out in second and third levels of the hierarchy. In this way, multiple individual schedulers are used to cater for the different requirements of different classes of services. However, partitioning the scheduling process in a fixed way or slow-changing dynamic way proves difficult and inefficient because of the fast-changing dynamics of the radio channels. The result may be that the scheduler assigned to one partition (class of service) will be under a high pressure to provide the required QoS level, but the scheduler assigned to another partition (class of service) is underutilised and has spare capacity. It is also found that the efficiency and performance of such partitioned schedulers degrade considerably as the amount of the shared bandwidth and the range of services having differing requirements increase. Attempts to recover some of the lost efficiency in such partitioned schedulers in practice result only in increased computational complexity and attendant costs.

In United Kingdom patent publication no. GB-A-2390775 the present inventor has also proposed a packet scheduling technique employing a genetic algorithm. In this technique, a plurality of candidate scheduling solutions are generated for each TTI. Each candidate solution corresponds to an individual in the genetic algorithm and specifies which receivers are to be allocated which channels in the TTI concerned. The fitness of each candidate scheduling solution is determined. The fitness may take into account several different measures of performance of the scheduling solution concerned, for example throughput, delay and fairness. The individual performance measures may be weighted when determining the fitness for each candidate solution. Individuals in the current generation are selected as parents based on the fitness values of the corresponding candidate solutions. Fitter solutions have a higher chance of being selected as parents. Children (candidate solutions for the next generation) are produced by the selected parents in accordance with genetic operators such as crossover and mutation. In this way, over a series of iterations (generations) the genetic algorithm refines the candidate scheduling solutions until, at some point, a single best solution is selected for the TTI under consideration.

Although such a genetic algorithm offers the potential for achieving much better scheduling performance than conventional techniques such as round robin scheduling and max C/I scheduling, it does require significant computing resources, especially when the population of individuals is large.

It is therefore desirable to provide a packet scheduling technique which avoids the shortcomings of partitioned schedulers without requiring such a large computational resource as a packet scheduling technique based on a genetic algorithm.

US 2002/017638 A1 discloses a packet scheduling method, for scheduling packets of data for transmission from a transmitter via at least one channel to a plurality of receivers, which method may be considered to comprise: producing for each individual receiver at least two different individual measures, each being a measure of scheduling performance in one or more different aspects; producing for each individual receiver a combined measure of the scheduling performance in at least two different said aspects by combining said individual measures for the receiver concerned; and employing the respective combined measures for different receivers to decide the receiver(s) to which packets are to be transmitted. In this method two individual measures of scheduling performance are produced for each receiver. The first individual measure is a data rate request (DRR) which is related to the quality of the transmission channel. For example, the DRR may be based on a C/I ratio reported by the receiver. The second individual measure is a projected throughput T' to the receiver. This is updated in each transmission slot using a lowpass filter based on the DRR for the receiver. The combined measure is the ratio DRR/T'. In order to reduce the influence of DRR relative to T', and hence improve fairness, the combined measure may be modified to $DRR/(T')^{\alpha}$, where $\alpha$ is a fairness parameter common to all receivers.

US 6493331 discloses a method for providing data transmissions to a number of receiver units in a communications system. In accordance with the method, a first set of parameters to be used for scheduling data transmissions is updated, and the data transmissions to the users are prioritised and assigned to available channels based on their priorities. A second set of parameters to be used for transmitting is updated, and the data transmissions are transmitted on the assigned channels to the receiver units using the updated second set of parameters. The performance (e.g., FER) of the data transmissions can be measured and the transmit power levels and/or data rates for the data transmissions can be adjusted accordingly based on the measured performance.

The first set of parameters may include, for example, channel occupancy probabilities, loading probabilities, characterisation of C/I of the receiver units, or back-off factors, or a combination thereof. To perform the prioritisation, channel metrics may be computed for the available channels for each receiver unit using the updated first set of parameters. The channel metrics can relate to the (e.g., realisable or actual) cumulative throughput for the receiver units, outage probabilities, expected C/I, or some other measures, and may further be reflective of expected interference from interfering sources.

A packet scheduling method embodying a first aspect of the present invention is characterised by: assigning respective weightings to said at least two different scheduling-performance aspects; combining said individual measures in accordance with said assigned weightings to produce said combined measure; and further characterised in that at least one said individual measure is independent of at least one said aspect which influences another one of said individual measures.

Such a method enables scheduling of data to be carried out for all the receivers as a single group, without having to classify the receivers into different scheduling classes such as different service types. Such a method also enables the scheduling to take account of several different performance aspects without the computational complexity of schedulers based on genetic algorithms. Because the individual measures are independent of one another, it is possible to achieve accurate control of the scheduling performance to be achieved by controlling the weightings.

The weightings may be adjustable by an operator of the transmitter, or may be adjusted automatically based on the scheduling performance. This enables the scheduling performance to be tailored for different traffic mixes or channel conditions.

At least one said individual measure may be influenced by a priority assigned individually to the receiver, or by a priority assigned to a type of service (e.g. WWW browsing, video) provided to the receiver.

Preferably, at least one said individual measure is adjusted to reduce a mismatch between it and another one of said individual measures. The measures may be adjusted such that all of them are in the same range, e.g. 0 to 1, so that equal weightings have equal effect on the different measures.

One or more of said individual measures may be normalised, for example the value for any one receiver may be normalised relative to the sum of the values for all the receivers.

In a preferred embodiment, the or each said combined measure is produced by forming a product of said individual measures for the receiver concerned.

There may be a plurality of channels available for transmitting data to the receivers, as in an HSDPA system. In this case, the method preferably further comprises: producing respective first and second such combined measures for each said individual receiver; ranking the receivers based on their respective first combined measures and forming a list of the receivers in the order in which they are ranked; and allocating channels to the receivers in the list, based on their respective second combined measures, starting from the highest-ranked receiver in the list.

In this embodiment the decision on the receivers to which packets are to transmitted is influenced by both the first and second combined measures, which gives greater flexibility over the scheduling decision. It is possible for at least one said aspect to be assigned different respective weightings for producing the first and second combined measures respectively.

There are many different aspects of scheduling performance which it may be desirable to consider. These may include: success or failure in delivering data to the receiver within a tolerable delay threshold; a quality of a channel between the transmitter and the receiver; how much data is estimated to be deliverable successfully to the receiver; how much data is waiting at the transmitter for transmission to the receiver; delay in delivering data to the receiver; and fairness as between different receivers. The aspects do not have to be operational ones. For example, a purely commercial aspect could be considered such as profitability for the operator in providing a service to the receiver.

The method is preferably carried out iteratively for a series of scheduling instants, for example TTIs. In one embodiment, for each said scheduling instant, new combined measures are produced for the receivers and a new decision is made on the receiver(s) to which packets are to be transmitted.

The transmission may be a wireless transmission, the transmitter may be part of a base station of a wireless communication system, and each receiver may be part of a user equipment of that system.

According to a second aspect of the present invention there is provided packet scheduling apparatus, for scheduling packets of data for transmission from a transmitter to a plurality of receivers via at least one channel, which apparatus comprises: means for producing for each individual receiver at least two different individual measures, each being a measure of scheduling performance in one or more different aspects; means for producing for each individual receiver a combined measure of performance of the apparatus in at least two different said aspects by combining said individual measures for the receiver concerned; and means for employing the respective combined measures for different receivers to decide the receiver(s) to which packets are to be transmitted; characterised by: means for assigning weightings to said at least two different aspects of performance of the packet scheduling apparatus; and further characterised in that: the combined measure producing means is operable to combine said individual measures in accordance with said assigned weightings to produce said combined measure; and at least one said individual measure is independent of at least one said aspect which influences another one of said individual measures.

According to a third aspect of the present invention there is provided a transmitter comprising: packet scheduling apparatus embodying the aforesaid second aspect of the invention; and transmitting means connected operatively to said packet scheduling apparatus and operable to cause packets to be transmitted to the receiver(s) decided by the packet scheduling apparatus.

Reference will now be made, by way of example, to the accompanying drawings, in which:-

Figure 1, discussed hereinbefore, shows parts of a wireless communication system employing a HSDPA technique for downlink transmissions;
Figure 2 shows an example of the operation of the HSDPA technique in the Figure 1 system;

Figure 3 shows a block diagram of packet scheduling apparatus embodying the present invention;
Figure 4 is a flowchart illustrating operation of a preferred embodiment of the present invention;
Figure 5 is a diagram showing an example of a channel allocation process carried out in the Figure 4 embodiment;
Figure 6 is a schematic diagram for use in explaining a mixed-service traffic scenario in an HSDPA system;
Figure 7 is a schematic view for use in explaining a cellular environment in an HSDPA system;
Figure 8 is a diagram illustrating a first simulated example of packet transmission activity in an HSDPA system;
Figure 9 is a graph illustrating example variations in a carrier-to-interference ratio of a downlink channel over a series of transmission time intervals for different UEs in an HSDPA system;
Figure 10 is a graph illustrating a cumulative density function of overall throughput of data versus delay characteristic for an embodiment of the present invention and for a conventional scheduler in the first simulated example;
Figure 11 is a graph illustrating a cumulative density function of average throughput of WWW browsing data versus delay characteristic for an embodiment of the present invention and for a conventional scheduler in the first simulated example;
Figure 12 is a graph illustrating a cumulative density function of average throughput of video data versus delay characteristic for an embodiment of the present invention and for a conventional scheduler in the first simulated example;
Figure 13 is a graph illustrating a variance of throughput of data over time for different UEs for an embodiment of the present invention and for a conventional scheduler in the first simulated example;
Figure 14 is a histogram illustrating packet transmission activity for individual UEs in the first simulated example for an embodiment of the present invention;
Figure 15 is a histogram corresponding to Figure 14 but for a conventional scheduler;
Figure 16 is a diagram illustrating a second simulated example of packet transmission activity in an HSDPA system;
Figure 17 is a graph illustrating a quality of service level for WWW browsing over time for an embodiment of the present invention and for a conventional scheduler in the second simulated example;
Figure 18 is a graph illustrating a quality of service level for video data over time for an embodiment of the present invention and for a conventional scheduler in the second simulated example;
Figure 19 is a graph illustrating an overall quality of service level over time for WWW browsing and video data for an embodiment of the present invention and for a conventional scheduler in the second simulated example;
Figure 20 is a graph illustrating total throughput over time for an embodiment of the present invention and for a conventional scheduler in the second simulated example;
Figure 21 is a graph illustrating an average throughput in each transmission time interval for an embodiment of the present invention and for a conventional scheduler in the second simulated example;
Figure 22 is a graph illustrating a variance of throughput of data over time for different UEs for an embodiment of the present invention and for a conventional scheduler in the second simulated example;
Figure 23 shows a block diagram of packet scheduling apparatus according to another embodiment of the present invention;
Figure 24 shows a block diagram of packet scheduling apparatus according to yet another embodiment of the present invention; and
Figure 25 is a graph illustrating variation of a computational complexity of an embodiment of the present invention with the number of UEs.

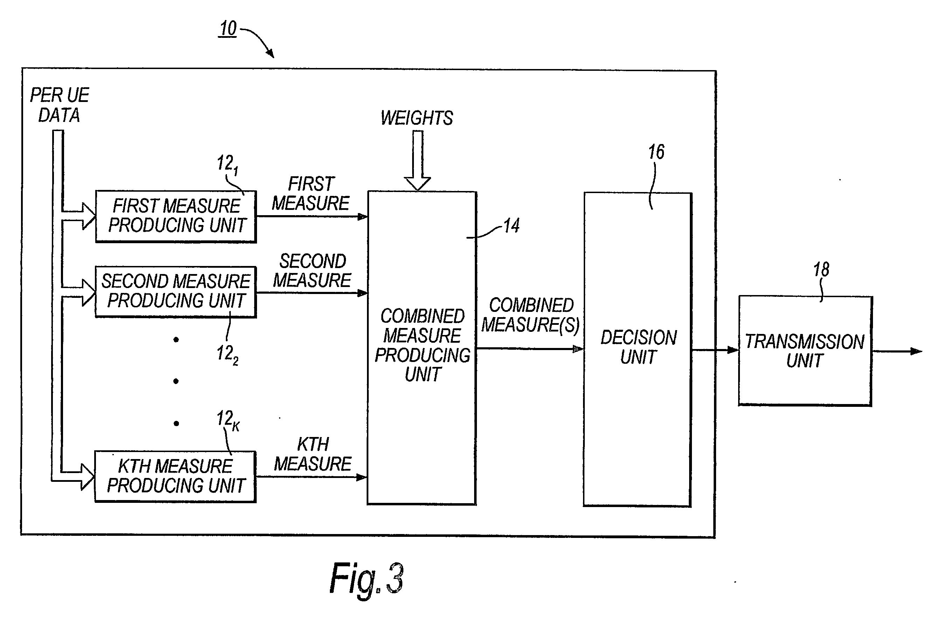

Figure 3 shows a block diagram of packet scheduling apparatus 10 embodying the present invention. The apparatus 10 is used to schedule packets of data for transmission from a transmitter to a plurality of receivers via at least one channel. A scheduling decision is made for each successive scheduling instant (eg each TTI). The transmitter is, for example, a base station (Node B) in a wireless communication system. The plurality of receivers in this case are different UEs served by the base station.

The apparatus 10 comprises a plurality of individual measure producing units $12_1$ to $12_K$. Each measure producing unit 12 receives data relating to each receiver (UE). The data may include, for example, carrier-to-interference ratio (C/I) reports and information regarding the fill levels of source queues in which the data destined for each different receiver is buffered in the transmitter prior to transmission.

Based on the received data, each measure producing unit 12 produces an individual measure of one aspect of the performance of the packet scheduling apparatus 10 for each receiver. For example, as described later in more detail, a first measure produced by the first measure producing unit $12_1$ may be a measure of the proportion of packets which fail to reach the receiver within a tolerable delay threshold for the receiver concerned. A second measure produced by the second measure producing unit $12_2$ relates to a different aspect of the performance of the packet scheduling apparatus 10 in relation to each receiver. For example, the second measure may be a C/I report received from the receiver.

The apparatus 10 further comprises a combined measure producing unit 14 which receives the first to Kth measures produced by the measure producing units $12_1$ to $12_K$ for each receiver. The combined measure producing unit 14 also receives one or more sets of weights. The combined measure producing unit 14 combines the first to Kth measures for each receiver in a weighted manner as determined by the or one set of weights and outputs one or more combined measures of scheduling performance for each receiver. The or each combined measure is therefore a measure of the scheduling performance in at least two different aspects of performance, with the weighting attached to the different aspects determined by the weights supplied to the unit 14.

The apparatus 10 further comprises a decision unit 16 which receives the or each combined performance measure produced by the combined measure producing unit 14 and, based on the combined performance measure or measures, decides the receiver or receivers to which packets are to be transmitted in the scheduling instant under consideration.

The apparatus 10 is connected operatively to a transmission unit 16 which, when a scheduling instant occurs for which the decision unit has made a scheduling decision, causes packets to be transmitted to the chosen receiver(s).

In the usual case, in which a plurality of channels are available for transmitting packets from the transmitter to the receiver, the decision unit 16 must also decide how the chosen receiver(s) is (are) to be allocated to the available channels in the scheduling incident under consideration.

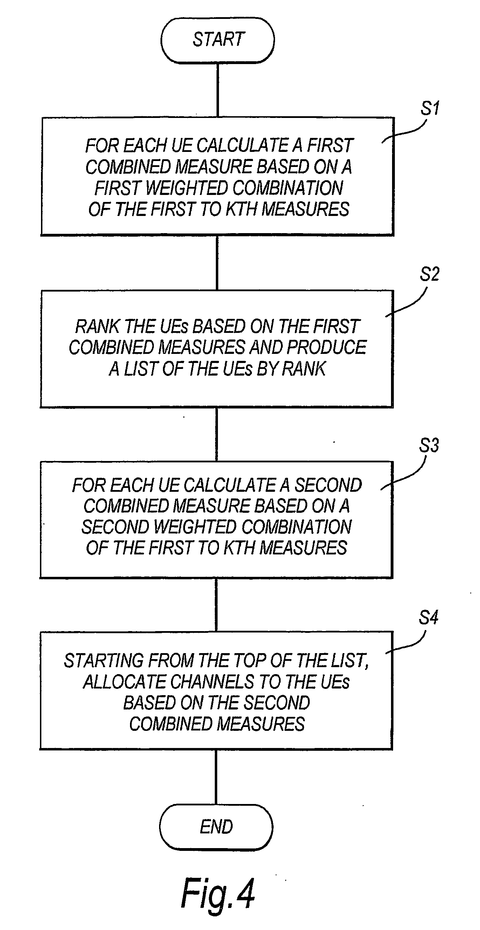

Figure 4 is a flowchart for explaining an example of the operation of the combined measure producing unit 14 and decision unit 16 in the Figure 3 apparatus. The series of steps shown in Figure 4 is carried out for every scheduling instant (eg TTI) under consideration.

In a first step S1 the combined measure producing unit 14 calculates for each UE a first combined measure (ranking measure) based on a first weighted combination of the first to Kth measures for the UE concerned. The first to Kth measures are weighted using a first set of weights (ranking weights) when producing this first combined measure.

In step S2 the decision unit 16 ranks the UEs based on their respective first combined measures as produced by the combined measure producing unit 14. The decision unit produces a list of the UEs by rank, with the highest-ranked UE at the top of the list. The list only includes UEs which have data waiting in a source queue at the transmitter for transmission to the UE concerned.

In step S3, the combined measure producing unit 14 calculates for each UE a second combined measure (channel allocation measure) based on a second weighted combination of the first to Kth measures for the UE concerned. The first to Kth measures are weighted using a second set of weights (channel allocation weights) when producing the second combined measure. The channel allocation weights may be the same as or different from the ranking weights.

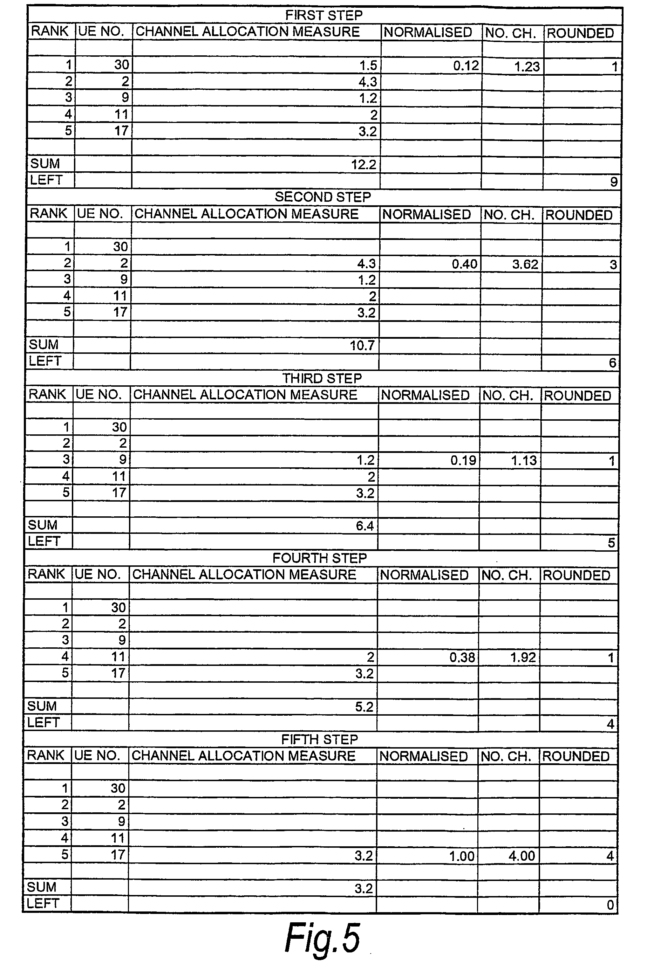

In step S4 the decision unit 16 refers to the list of UEs produced in step S2. Starting from the top of the list, the decision unit 16 allocates channels to the UEs in the list based on their respective second combined measures. The processing in step S4 continues until no channel remains for allocation. More details of an example of the processing carried out in step S4 are presented later with reference to Figure 5.

This completes the processing for the current scheduling instant. The processing is then repeated for the next scheduling instant.

Next, an embodiment of the present invention suitable for use in an HSDPA system will be described in detail. This embodiment seeks to optimise the performance of the HSDPA system in terms of measures such as quality of service (QoS), channel quality, deliverable data packets, data waiting at the transmitter, and delay profile.

In this embodiment, the first individual measure of scheduling performance is a QoS measure. In order to produce this measure, a tolerable delay threshold *Tolerance_Delay* is defined for each kind of service made available in the HSDPA system. For example, for real-time video services this tolerable delay threshold is assumed to be 100ms. For worldwide web (WWW) browsing sessions, the tolerable delay threshold is assumed to be 1.5s. In general, an HSDPA system seeks to deliver the highest possible number of data packets from the transmitter (Node-B) to each UE within the defined tolerable delay threshold.

Assume that N is the total number of UEs to which packets are being transmitted during the current TTI. $Oct_{Received_n}$ is the number of octets which have been delivered successfully (error-free) to the nth UE. These error-free delivered octets can be divided into QoS-satisfied and QoS-failed octets. QoS-failed octets are the octets delivered outside the tolerable delay threshold. Therefore, for each UE, the number of QoS-satisfied received octets may be defined as

$$Oct_{Received\_Satisfied\_QoS_n} = Oct_{Received_n} - Oct_{Received\_Failed\_QoS_n}, \quad n=1...N \qquad (1)$$

where $Oct_{Received\_Satisfied\_QoS_n}$ is the number of QoS-satisfied octets and $Oct_{Received\_Failed\_QoS_n}$ is the number of received QoS-failed octets for *n*th UE.

Incidentally, it is possible for the Node-B to find out the delivery delays of the packets it transmits to each UE based on acknowledge messages ACK transmitted back to the Node-B by the UE after received. Further information concerning these acknowledge messages is provided, for example, in our co-pending United Kingdom patent application no. 0216245.1.

For each UE the proportion of throughput which satisfies the QoS requirement may be defined as

$$Throughput\_Satisfy\_QoS_n = \frac{Oct_{Received\_Satisfied\_QoS_n}}{Oct_{Arrived\_Node\_B_n}}, \quad n=1...N \tag{2}$$

where $Oct_{Arrived\_Node\_B_n}$ is the number of octets originally delivered to a source queue for the $n$th UE at Node B.

In the case in which no packet has arrived at Node B for the nth UE, it is assumed that $Throughput\_Satisfy\_QoS_n = 0$ for that UE.

This value then becomes subject to a nonlinear transform so that

$$Ratio\_Satisfy\_QoS_n = 1/(1 + Throughput\_Satisfy\_QoS_n), \quad n=1...N \tag{3}$$

The QoS measure for each UE then is defined as

$$Metric\_QoS_n = Ratio\_Satisfy\_QoS_n / \sum_{i=1}^{N} Ratio\_Satisfy\_QoS_i, \quad n=1...N \tag{4}$$

This normalisation is applied to the final measure in order to map the values of the QoS measures to a range between 0 and 1.

The second individual performance measure in this embodiment is based on the reports of C/I values received from the UEs. In order to map the C/I measure for each UE to a range between 0 and 1 each reported C/I value is scaled relative to the sum of all of the reported C/I values:

$$Metric\_C/I_n = C/I_n / \sum_{i=1}^{N} C/I_i, \quad n=1...N \tag{5}$$

where $C/I_n$ is the reported value of C/I for the nth UE.

The third individual performance measure in this embodiment relates to an estimated number of efficiently deliverable octets $Eff\_Oct_n$ for each UE. In this case, it is assumed that the HSDPA system employs an adaptive modulation and coding (AMC) technique to enable the transmitter (Node-B) to select different modulation and/or coding schemes under different channel conditions. In the AMC technique, each UE produces a measure of a downlink channel quality it is experiencing from the base station, and reports this measure to the Node-B. The measure is, for example, a C/I value for the downlink channel. The Node-B then employs the reported channel measures for each UE, as well as information relating to the system limitations and available modulation and coding scheme (MCS) levels, to identify the most efficient MCS level for the particular UE. Thus, UEs that have better channels or are located in the vicinity of the Node-B can employ higher MCS levels and therefore enjoy higher transmission rates. This selection can be carried out, for example, by imposing C/I value thresholds (eg -8dB,-2dB,+4dB) for moving to the next MCS level. Effectively, the result is a classification of the transmission rates based on the channel quality of each UE.

In the present embodiment, it is assumed that each UE reports a C/I value in every TTI and that Node-B is capable of setting a new MCS level for each available channel in every TTI.

Another factor which impacts the number of efficient deliverable octets for each UE is the way in which erroneously-received packets are dealt with. In the present embodiment, it is assumed that a so-called chase combining process is applied to such erroneously-received packets (failed packets). In the chase combining process a failed packet is resent by the Node-B and subsequently the UE "soft" combines (for example using maximal ratio combining) all received copies of the same packet. The effective carrier-to-interference ratio (C/I) is then the sum of the respective C/Is of the two packets being combined. Thus the chase combining process improves the C/I of the transmitted packets.

It is also assumed that all retransmissions have a higher priority than first transmissions. This means that all retransmission packets are given the opportunity to be transmitted before the first transmissions of new packets.

To estimate the number of efficiently deliverable octets for a UE, firstly the most efficient MCS level $MCS_n$ for the $UE_n$ is determined. Secondly, it is determined if the $UE_n$ is in transmission mode (ready to receive a new packet for the first time) or in retransmission mode (waiting for the Node-B to retransmit a packet which was previously erroneously received by the UE).

If the UE is in retransmission mode then the number of octets available for transmission $Oct_n$ is determined based on

$$Oct_n = \min\left(Oct(MCS_n), Oct\_Retransmit_n\right), \quad n=1...N \qquad (6)$$

where $Oct(MCS_n)$ is the maximum number of octets that the MCS level selected for the nth UE can deliver, and $Oct\_Retransmit_n$ is the number of octets available for retransmission (ie the number of octets waiting at Node-B to be retransmitted to the UE).

If the UE is in transmission mode the number of octets available for transmission is determined based on

$$Oct_n = \min\left(Oct(MCS_n), Oct\_Waiting\_in\_Queue_n\right), \quad n=1...N \qquad (7)$$

where $Oct\_Waiting\_in\_Queue_n$ represents the number of octets in a Node-B queue for transmission to the nth UE.

The maximum number of octets available for transmission by any one of the UEs then is determined based on

$$Oct_{n\,\max} = \max(Oct_n), \quad n=1...N \qquad (8)$$

where $n_{\max}$ represents the number of the UE with maximum number of available octets for transmission (the "best UE") and $Oct_{n_{\max}}$ is the maximum number of available octets for transmission to that best UE.

The efficient estimated deliverable octets for the best UE is then determined based on

$$Eff\_Oct_{n\,\max} = Oct_{n\,\max}.\left(1 - FER_{n\,\max}\right) \qquad (9)$$

where $FER_{n_{\max}}$ is an estimated frame error rate for the $n_{\max}$ th UE.

The efficient number of deliverable octets for the nth UE is then normalised relative to this maximum value so that the third individual measure becomes

$$Metric\_Oct_n = Oct_n.\left(1 - FER_n\right)/Eff\_Oct_{n\,\max}, \quad n=1...N \qquad (10)$$

The fourth individual measure of performance in this embodiment is a measure of how much data is waiting at the Node-B for transmission to each UE. This is related inversely to throughput of data to each UE.

For the nth UE the throughput is defined as

$$Th_n = \frac{\left(Oct_{Received}\right)_n}{\left(Oct_{Arrived\_Node\_B}\right)_n}, \quad n=1...N \qquad (11)$$

Then a ratio *Metric_Waiting_Ratio$_n$* of data waiting to be delivered is defined as

$$Metric\_Waiting\_Ratio_n = 1 - Th_n , \quad n=1...N \qquad (12)$$

The fifth individual measure of performance in this embodiment relates to the delays being experienced by each UE. Firstly, the oldest undelivered octet waiting in the Node-B for transmission to the UE is considered, and the amount of delay to which that octet is subject is determined.

$$Delay_n = M.TTI - Arrival\_Time\_Earliest_n , \quad n=1...N \qquad (13)$$

where *M.TTI* represents current time and *Arrival_Time_Earliest$_n$* represents the time of arrival at the Node-B source queue for the nth UE of the oldest undelivered octet.

Next, using the same tolerable delay thresholds established for different services as described above in relation to the first measure, the distance by which the worst delay experienced by the UE is from its tolerable delay threshold is calculated.

$$Delay\_Distance_n = Delay_n - Tolerance\_Delay_n , \quad n=1...N \qquad (14)$$

where *Delay_Distance$_n$* is the distance from the threshold for the nth UE.

The delay distances of all the UEs then are mapped to positive values. To perform the positive mapping first the minimum distance is determined so that

$$Delay\_Distance_{min} = \min(Delay\_Distance_n) , \quad n=1...N \qquad (15)$$

The adjusted delay distance then is defined as

$$Adjusted\_Delay\_Distance_n = Delay\_Distance_n - Delay\_Distance_{min} , \quad n=1...N \qquad (16)$$

Then a nonlinear mapping is applied. The result is

$$Mapped\_Delay_n = \beta_n /(1 + Adjusted\_Delay\_Distance_n) , \quad n=1...N \qquad (17)$$

where *Mapped_Delay$_n$* is the mapped delay value for the nth UE and $\beta_n$ is a parameter which specifies the priority of the service being provided to the nth UE. Here, for example, a service is WWW browsing or real-time video. The higher $\beta_n$, the higher is the priority of the service.

The final measure relating to delay is determined as

$$Metric\_Delay_n = Mapped\_Delay_n / \sum_{n=1}^{N} Mapped\_Delay_n , \quad n=1...N \qquad (18)$$

which guarantees that the measure *Metric_Delay$_n$* is mapped to a value between 0 and 1.

In this embodiment the first combined measure for each UE is calculated by forming a weighted product of the individual performance measures as follows

$$Ranking\_Metric_n = \prod_{k=1}^{K}\left(1 + W_{kn} \cdot Metric\_Ranking_n\right), \quad n=1...N \qquad (19)$$

where $W_{kn}$ are the ranking weights, *Metric_Ranking$_n$* is any one of the individual performance measures defined in (1)-(18) and K is the number of measures involved.

The UEs are then ranked based on their respective first combined measures. A list of the UEs is then compiled, with the highest-rank UE at the top of the list and the lowest-ranked UE at the bottom of the list. Only UEs which have data waiting at Node-B are included in the list.

The second combined measure for each UE in this embodiment is calculated as follows:

$$Channel\_Allocation\_Metric_n = \prod_{k=1}^{K}\left(1 + V_{kn} \cdot Metric\_Channel\_Allocation_n\right), \quad n=1...N \qquad (20)$$

where $V_{kn}$ are the channel allocation weights, *Metric_Channel_Allocation$_n$* is any one of the individual performance measures defined in (1)-(18) and K is the number of measures involved.

The channel allocation process starts from the top of the list of ranked UEs, and allocates channels according to the relative values of the channel allocation measures produced in equation 20.

This process is illustrated schematically in Figure 5.

Suppose that the list of UEs contains five UEs in total, with UE 30 at the top of the list, followed by UEs 2, 9, 11 and 17. Also, assume that the channel allocation measure produced by equation 20 for these UEs are 1.5, 4.3, 1.2, 2.0 and 3.2 respectively.

In the first step, the sum of the channel allocation measures for all of the UEs yet to be allocated channels (ie all of the UEs in this case) is calculated to be 12.2. The highest-ranked UE yet to be allocated is UE 30. Its channel allocation measure of 1.5 is then "normalised" relative to the sum of all the channel allocation measures and becomes 0.12. It is assumed in this example that there are ten channels available in total. Accordingly, the normalised channel allocation measure for UE 30 is multiplied by 10 to yield 1.23. This is then rounded down using a "floor function" to produce the final result that UE 30 is allocated one channel. This leaves 9 channels remaining for allocation in subsequent steps. Incidentally, if the final result is less than 1 it is set to 1 in this embodiment so that the minimum channel allocation is 1 channel.

In the second step the sum of the channel allocation measures of the UEs remaining to be allocated (UEs 2, 9, 11 and 17) is recalculated as 10.7. The channel allocation measure 4.3 of the highest-ranked remaining UE (UE 2) is normalised relative to the new sum and becomes 0.40. This is multiplied by the number of remaining channels, ie 9, to produce the result of 3.62 channels, which is rounded down to 3 channels in the final allocation. This leaves 6 channels remaining for the next step. The procedure is followed again in the third step, with the result that UE 9 is allocated 1 channel, leaving 5 channels left over. In the fourth step, it is calculated that UE 11 should also be allocated 1 channel, leaving 4 channels remaining at this stage. Finally, in the fifth step UE 17 is allocated the remaining 4 channels, and the process ends.

It will be appreciated that other channel allocation processes are possible in embodiments of the invention.

With the particular individual performance measures in this embodiment, equation 19 above can be rewritten as

$$Ranking\_Metric_n = \left(1 + W_{1n} \cdot Metric\_QoS_n\right)\cdot\left(1 + W_{2n} \cdot Metric\_C/I_n\right)\cdot\left(1 + W_{3n} \cdot Metric\_Oct_n\right) \qquad (21)$$
$$\cdot\left(1 + W_{4n} \cdot Metric\_Waiting\_Ratio_n\right)\cdot\left(1 + W_{5n} \cdot Metric\_Delay_n\right)$$
$$n=1...N$$

where $W_{in}$ represent the weighting parameters.

Similarly, equation 20 above can be rewritten as

$$Channel\_Al\,location\_Metric_n = \left(1 + V_{1n} \cdot Metric\_QoS_n\right) \cdot \left(1 + V_{2n} \cdot Metric\_C\,/\,I_n\right) \cdot \quad (22)$$
$$\left(1 + V_{3n} \cdot Metric\_Oct_n\right) \cdot \left(1 + V_{4n} \cdot Metric\_Waiting\_Ratio_n\right) \cdot \left(1 + V_{5n} \cdot Metric\_Delay_n\right)$$
$$n = 1 \dots N$$

where $V_{in}$ represent the weighting parameters.

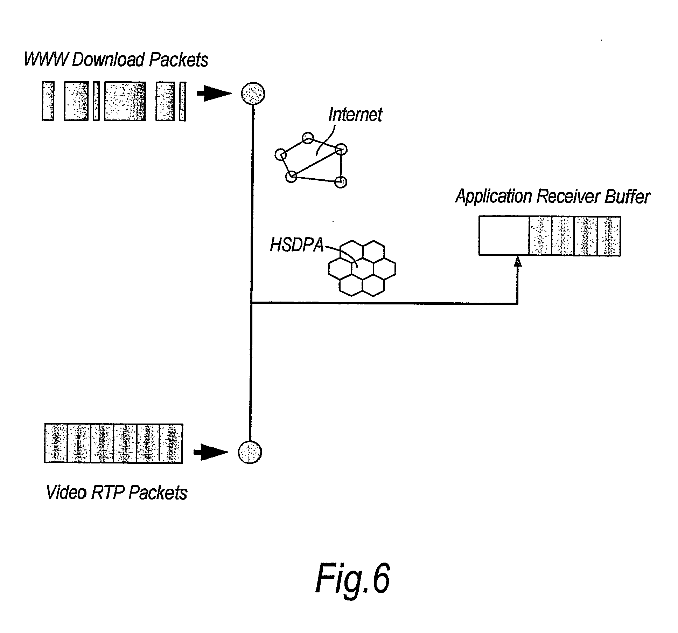

Next, various simulation results for preferred embodiments of the invention are provided. These simulation results relate to a simulated traffic environment in which there are forty UEs in total. Ten of these UEs (UE1 to UE10) are assumed to be attempting to receive real-time video and the remaining thirty UEs (UE11 to UE40) are assumed to be attempting WWW browsing sessions. This scenario is illustrated schematically in Figure 6. As shown in Figure 6, WWW download packets are delivered to an application receiver buffer in a UE via the Internet and via an HSDPA system. Real-time video is delivered to the UE's application receiver buffer via the HSDPA system directly. The real-time video data is made up of real time protocol (RTP) packets. In the present simulation, the stream of video data is modelled based on ITU H.263 Codec.

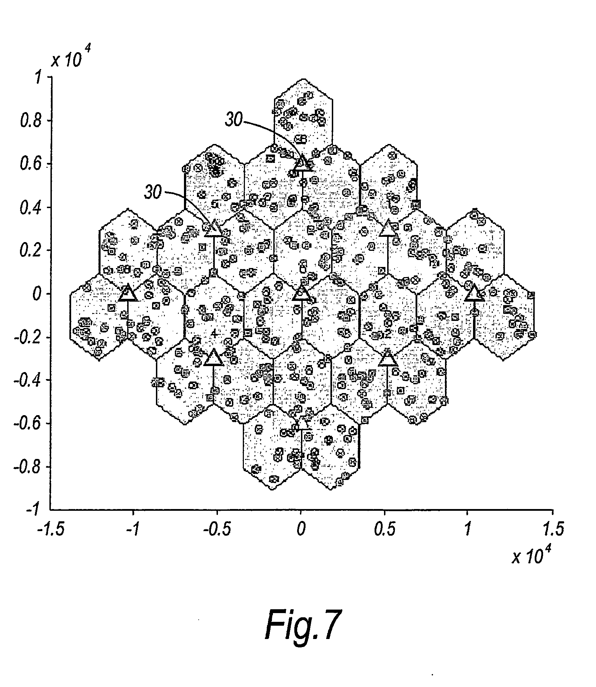

The cellular environment which is assumed in the present simulation is illustrated schematically in Figure 7. In Figure 7 the spacing between adjacent base stations (Node-Bs) 30 is assumed to be 6km. There is a base station for each cell. Each cell is divided up into three sectors, and the sector boundaries are shown in Figure 7. As illustrated in Figure 7, the UEs are assumed to be distributed uniformly across the cells.

It is also assumed in relation to the cellular environment that the Node-Bs have fixed transmission powers. This is a realistic assumption for a fully-loaded HSDPA system which does not employ power control. Adjacent cell interference is the result of transmissions from adjacent Node-Bs. The level of adjacent cell interference is determined based on the fixed power levels from transmitting Node-Bs. Another assumption is that path loss is present and affects the signal quality. It is also assumed that one packet scheduling apparatus embodying the present invention is provided per sector to handle the data for all of the UEs in that sector.

To model the impact of Rayleigh fading, an ETSI 6-path Rayleigh vehicular A channel model is employed. It is assumed that the speed of each UE is 3.6km/h. Table 1 below illustrates the relative delay and average power of the six different paths assumed to make up the channel.

*Table 1*

| Path | Channel A | |
|------|-----------------|---------------|
|      | Rel. Delay (nS) | Avg. Pwr (dB) |
| 1    | 0               | 0.0           |
| 2    | 310             | -1.0          |
| 3    | 710             | -9.0          |
| 4    | 1090            | -10.0         |
| 5    | 1730            | -15.0         |
| 6    | 2510            | -20.0         |

The shadowing is assumed to have a log-normal distribution. The shadowing parameters that are assumed are set out in Table 2 below.

*Table 2*

| Parameters | Values |
|------------|--------|
| Log-normal Shadow fading standard deviation | 8 dB |
| Decorrelation Distance | 20 m |
| Correlation between sites | 0.5 |
| Correlation between sectors | 1 |

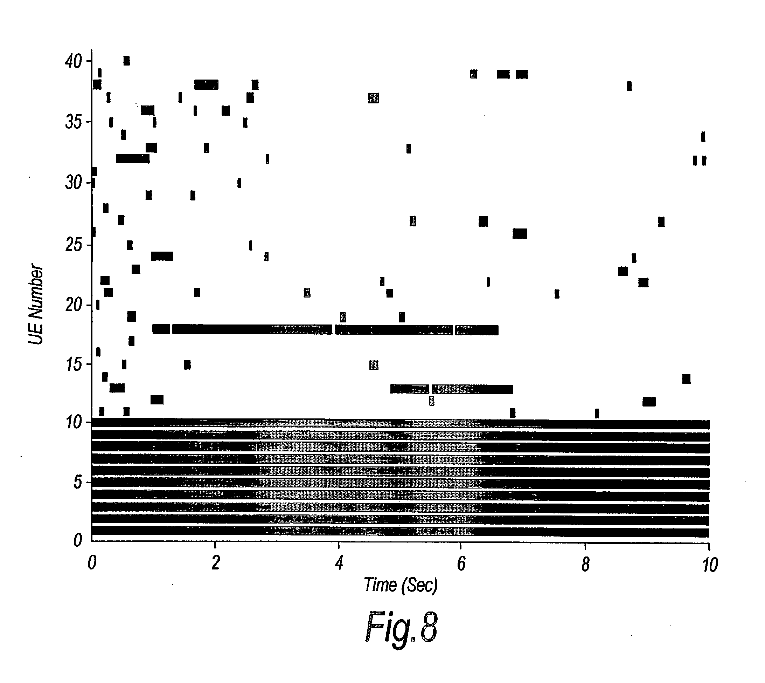

Figure 8 shows the assumed packet data arrivals for the different UEs in a first simulated example. In the first example, the total aggregate traffic load is assumed to be approximately constant over a series of 5,000 TTIs (10 second period). As can be seen from Figure 8, each video user (UE1 to UE10) has an almost continuous stream of packet arrivals. The data rate of each video user is, for example, 32kbits/s. For WWW users (UE 11 to UE 40), the packet arrivals are discontinuous. However, when data is arriving, the instantaneous data rate may be much larger than the video data rate of 32k bits/s. Thus, the aggregate offered load for WWW users is assumed to be large compared to that for video users. In other words, video users have a narrow pipe, whereas WWW users have a wide pipe.

It is assumed that the channel estimation performed by each UE is perfect, and that the feedback signalling is error free. Also, a minimum reporting delay is considered to be 3TTIs.

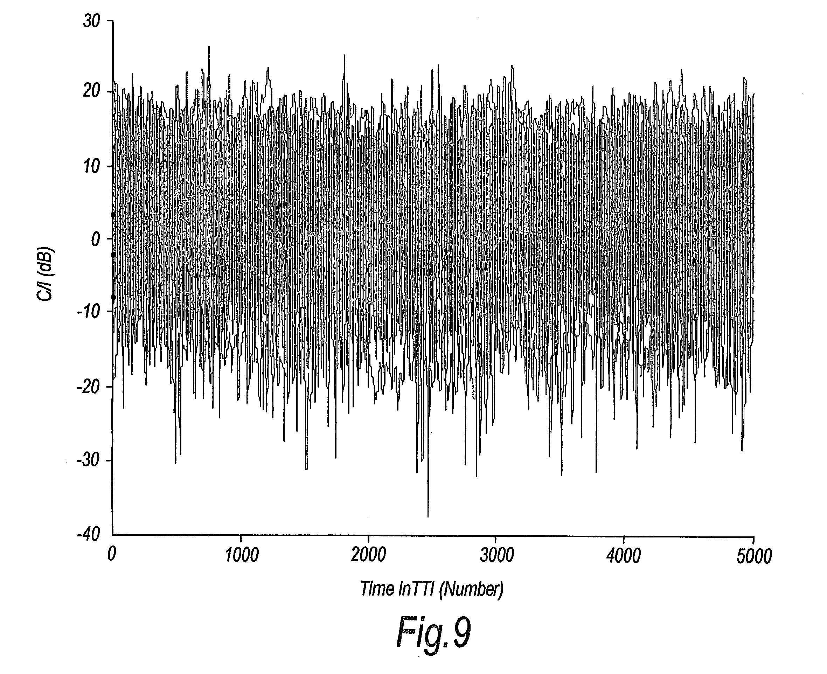

Figure 9 shows a simulated C/I scenario for the 40 UEs over the series of 5,000 TTIs.

In a preferred embodiment of the present invention for use with the mixed-service traffic scenario of this first example, the ranking weights are assigned the following values

$$W_{1n} = 1, \ W_{2n} = 0, \ W_{3n} = 1, \ W_{4n} = 1, \ W_{5n} = 10 \ , \quad n = 1 \cdots 40 \ .$$

The channel allocation weights are assigned the following values

$$V_{1n} = 1, \ V_{2n} = 0, \ V_{3n} = 1, \ V_{4n} = 1, \ V_{5n} = 10 \ , \quad n = 1 \cdots 40 \ .$$

It assumed that $\beta_n = 1$ for all the UEs. Therefore all the UEs have the same priority irrespective of the service they are using.

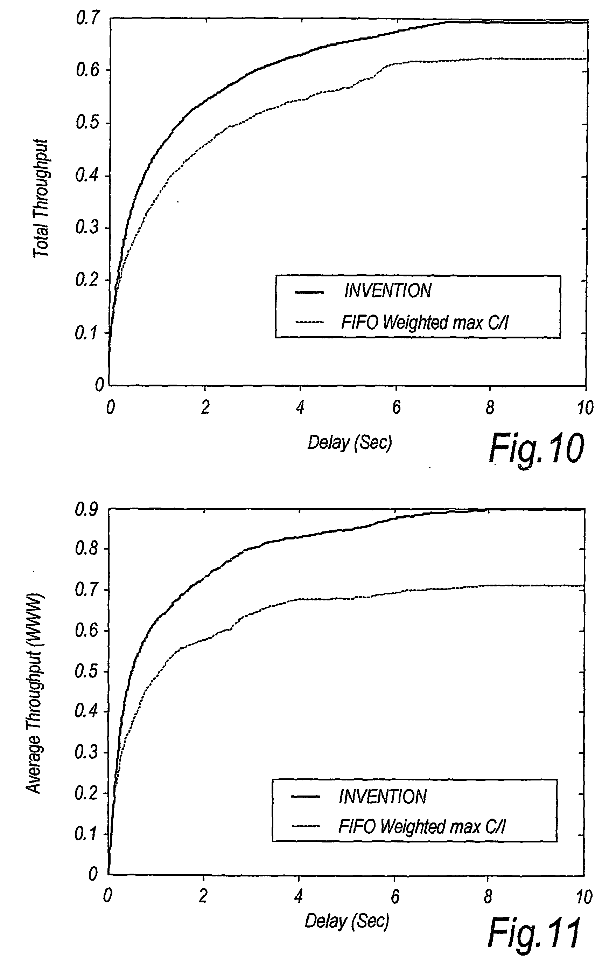

In the following description with reference to Figures 10 to 22, the performance of scheduling apparatus embodying the present invention using the weights set out above will be compared with the performance of a conventional FIFO weighted Max C/I scheduler. All references to a Max C/I scheduler mean a FIFO weighted Max C/I scheduler.

Figure 10 is a graph for comparing total throughput (WWW and video) versus delay in a scheduler embodying the present invention (solid line) and in the Max C/I scheduler (dotted line). The lines indicate a cumulative density function (CDF) of the throughputs of all UEs. It can be seen from Figure 10 that a scheduler embodying the invention succeeds in delivering 10% better overall throughput than the Max C/I scheduler.

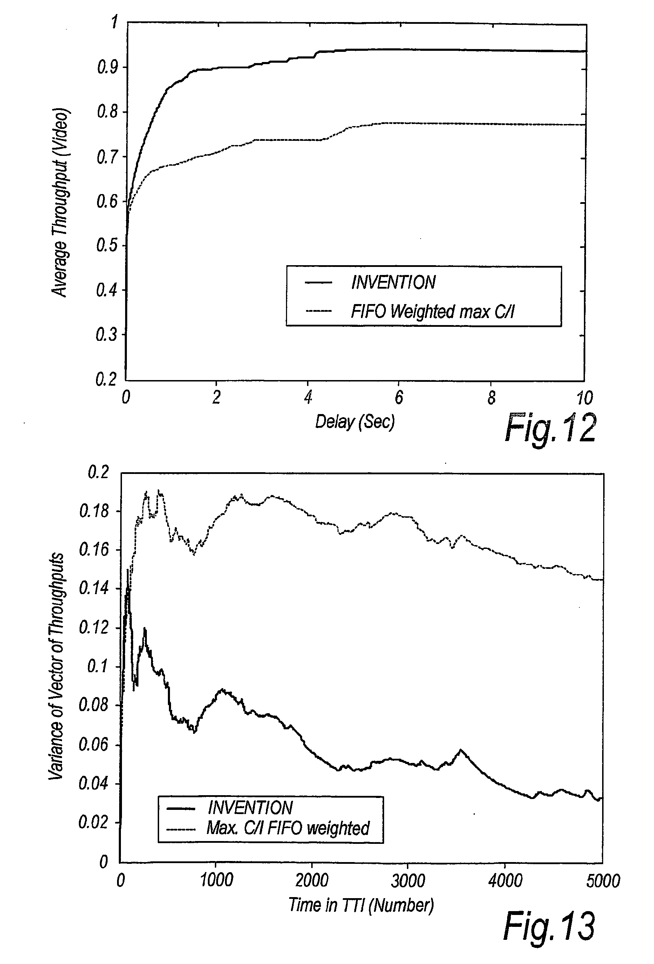

Figure 11 shows another graph for comparing WWW throughput versus delay in a scheduler embodying the present invention (solid line) and in the Max C/I scheduler (dotted line). The lines indicate a mean cumulative density function (CDF) of the throughputs of the UEs 11 to 40 which are having WWW sessions. It can be observed that a scheduler embodying the present invention manages to deliver 20% better average WWW throughput than the Max C/I scheduler.

Figure 12 is a graph corresponding to Figure 11 but for comparing average video throughput versus delay in a scheduler embodying the present invention (solid line) and in the Max C/I scheduler (dotted line). The lines indicate a mean CDF of the throughputs of the UEs 1 to 10 which are receiving video services. It can be observed that the scheduler embodying the present invention manages to deliver 18% better average video throughput than the Max C/I scheduler.

Performance in terms of fairness is compared in Figure 13. In Figure 13, fairness is measured based on the variance of the throughputs of the different UEs. The higher the variance of throughputs, the lower the fairness. It can be seen clearly that a scheduler embodying the present invention succeeds in providing better fairness than the Max C/I scheduler over almost all of the time period shown in Figure 13.

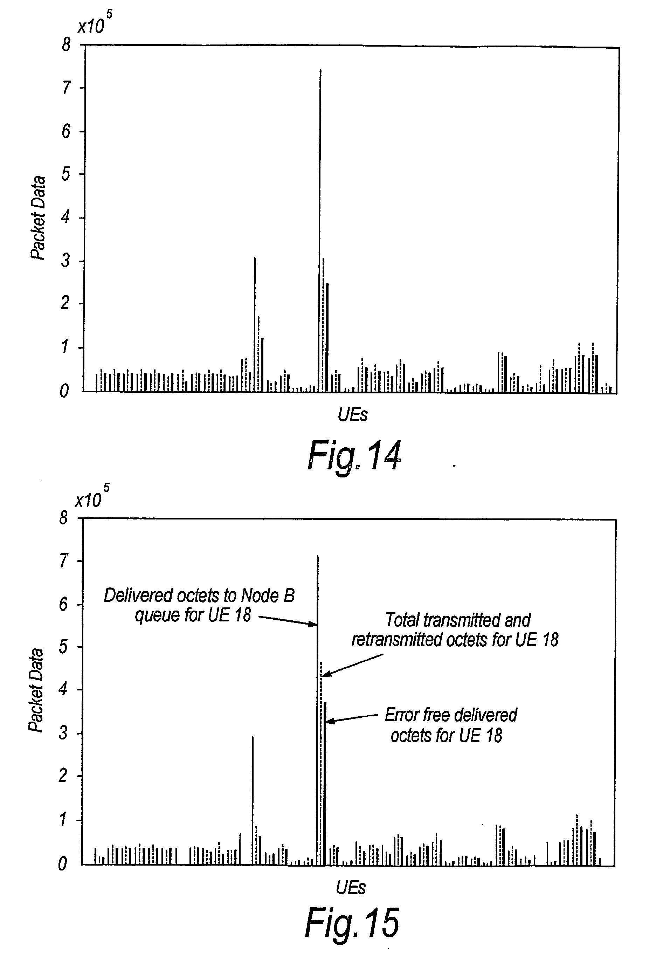

Figures 14 and 15 compare the packet data activity in a scheduler embodying the present invention (Figure 14) with that in a Max C/I scheduler (Figure 15). In these two figures, three lines are shown for each UE. The thin solid line (left most line) indicates the total number of octets destined for the UE that arrived at Node-B over the total transmission period (5,000 TTIs). The dotted line (middle line) indicates the total number of transmitted and retransmitted octets for the UE concerned. Finally, the thick solid line (right most line) indicates the total number of octets delivered error-free to the UE concerned.

It can be seen from Figure 15 that the Max C/I scheduler fails completely to deliver any data to some of the UEs (eg UE7 and UE20). A scheduler embodying the present invention, on the other hand, succeeds in delivering data to all of the UEs, and it can be seen that the service to the video users is much improved.

Table 3 below presents the performance comparisons for the first example in quantitative form. The performance comparison measures are delivered bit rate (total throughput over the 5,000 TTIs divided by 10 seconds), average delay, QoS for WWW services and QoS for video services. The average delay is the average of the respective delays experienced by the successfully-delivered packets. The QoS for each service is the ratio of octets delivered error-free to the relevant UEs within the tolerable delay threshold for the service concerned to the total number of octets which arrived at Node B.

**Table 3 Invention**

| Scheduling Type | FIFO Weighted Max C/I | Invention WWW: $\beta_n = 1$ Video : $\beta_n = 1$ | Invention (variant) WWW: $\beta_n = 1$ Video: $\beta_n = 1.2$ |
|---|---|---|---|
| Delivered Bit Rate | 1.2782 Mbps | 1.4196 Mbps | 1.2488 Mbps |
| Average Delay | 1.4769 | 1.0519 | 0.7316 |
| Satisfied QoS Conditions (WWW) | 0.5567 | 0.6849 | 0.6170 |
| Satisfied QoS Conditions (Video) | 0.5967 | 0.6171 | 0.6966 |

There are two columns for embodiments of the present invention in Table 3. The first column relates to the embodiment already described, in which the priority for all users is the same ($\beta_n$ = 1 for WWW services and for video services). The second column for the invention relates to a variant in which the video services are given a higher priority ($\beta_n$ = 1.2 for video services and $\beta_n$ = 1 for WWW services).

In the equal-priority case, the invention provides a substantially higher delivered bit rate at a much lower average delay than the Max C/I scheduler. The QoS for video services is approximately the same as for the Max C/I scheduler but the QoS for WWW users is much better.

For the variant in which the video users have higher priority than the WWW users, the QoS for video users is improved significantly, whilst that for WWW users falls back somewhat. Nonetheless, the QoS for WWW users still remains higher than that for the Max C/I scheduler. Also of note is that in this variant, even though the delivered bit rate is substantially the same as the Max C/I scheduler, the average delay is halved, which is a very significant improvement.

The ranking weights and channel allocation weights can be varied to take account of different traffic scenarios. It has been determined, for example, that the weights used in the embodiment described above work well with input loads which are relatively uniform as in the first example. If, however, the input load is variable, different weights may be appropriate, as will now be described with reference to a second simulated example.

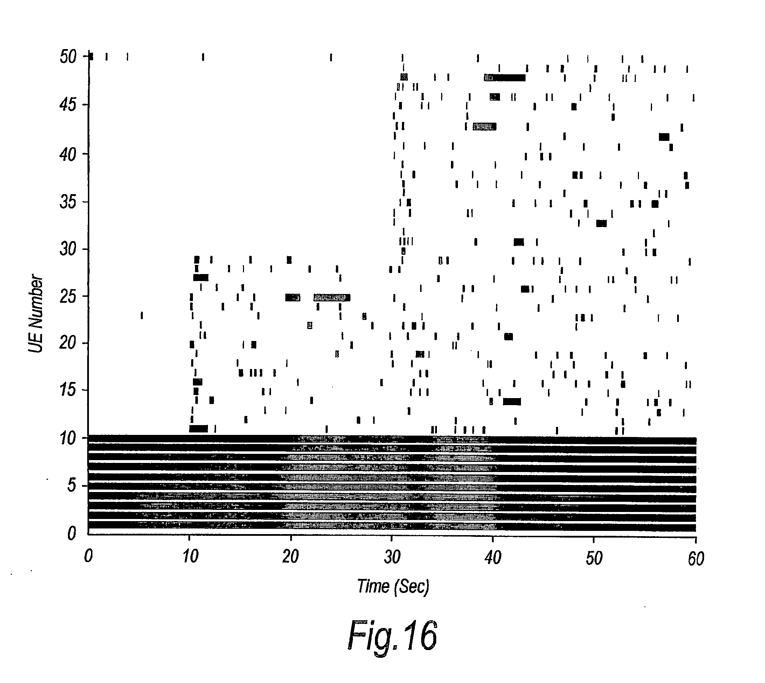

Figure 16 shows another traffic scenario, again having ten video users and 30 WWW users, but in this case the WWW users become active in a staggered manner, giving rise to a variable input load on the scheduler. The scenario in Figure 16 is deliberately exaggerated to test the performance of the scheduler under extreme circumstances.

The weight values which were used in the second example are as follows:

$$W_{1n} = 1, \ W_{2n} = 10, \ W_{3n} = 1, \ W_{4n} = 1, \ W_{5n} = 10$$

$$V_{1n} = 1, \ V_{2n} = 1, \ V_{3n} = 1, \ V_{4n} = 10, \ V_{5n} = 10$$

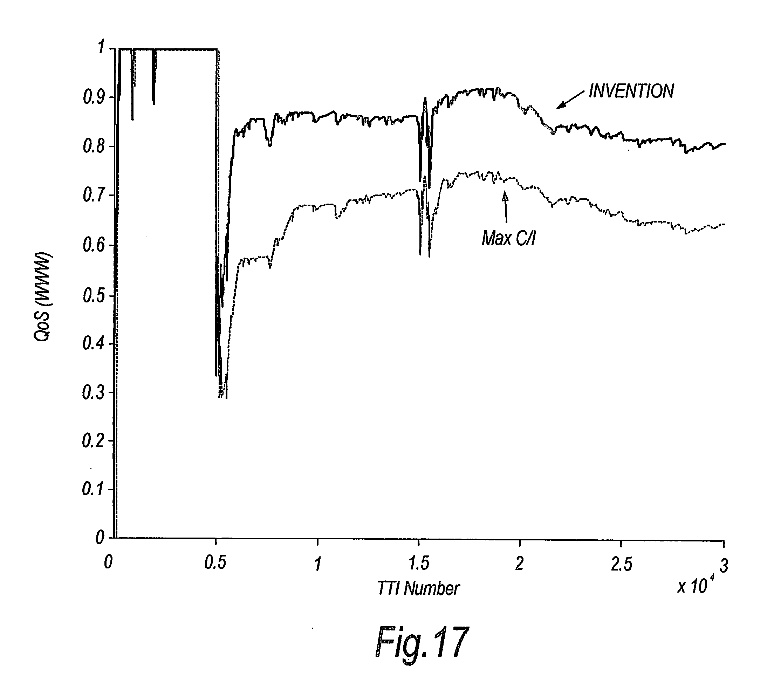

The quality of service (QoS) in this second example is considered with reference to Figures 17 to 19. For WWW download sessions the tolerable delay threshold is assumed to be 1.5s as before. For video services the threshold is assumed to be 0.1s as before. QoS is defined as the proportion of throughput which is delivered with a delay within the delay tolerance threshold. Figure 17 is a graph showing how the QoS for WWW browsing varies over the series of 5,000 TTIs in a scheduler embodying the present invention (solid line) and a Max C/I scheduler (dotted line). It can be seen that over the entire transmission period a scheduler embodying the invention provides a better QoS than the Max C/I scheduler.

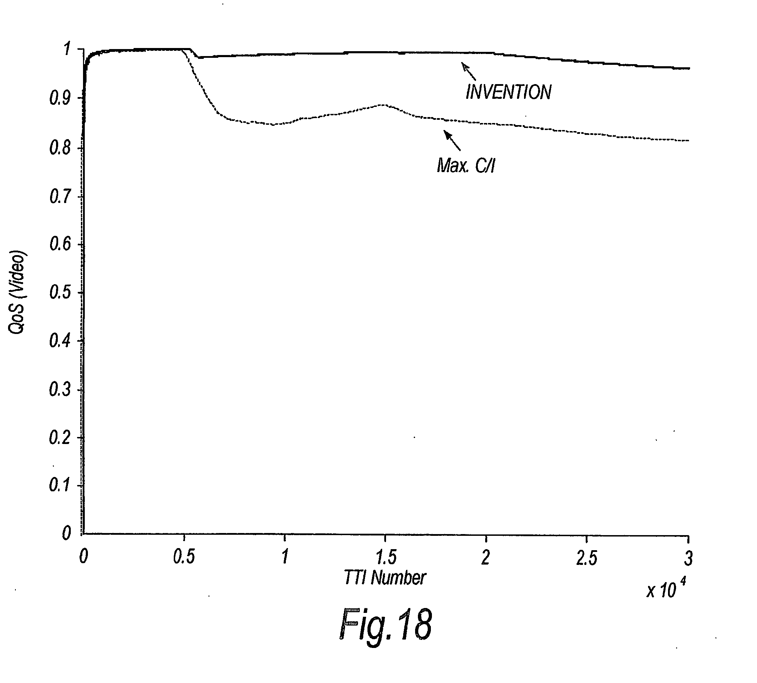

Figure 18 is a graph corresponding to Figure 17 but showing the QoS for video services. Again the superior performance of a scheduler embodying the present invention over the entire transmission period can easily be seen.

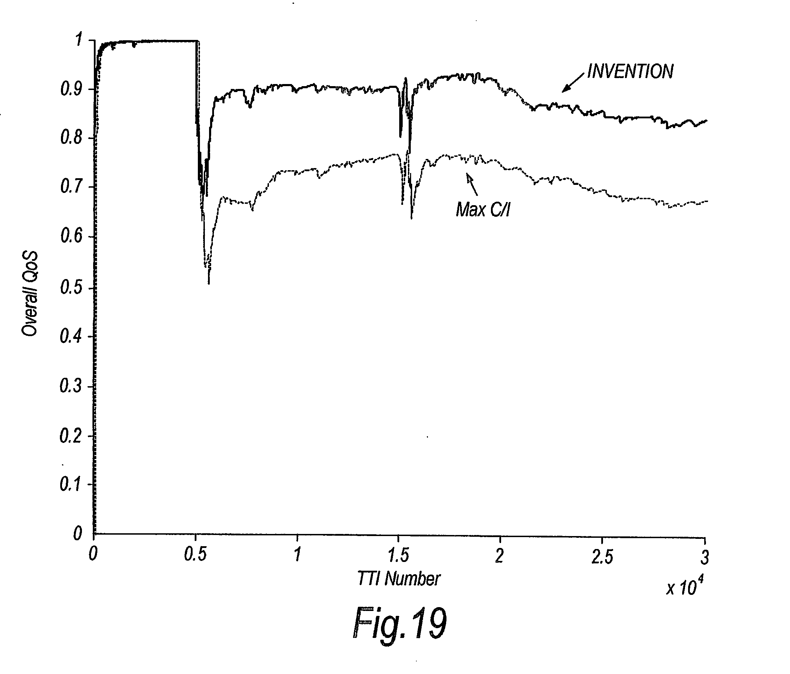

Figure 19 compares the overall QoS for all services (video and WWW).

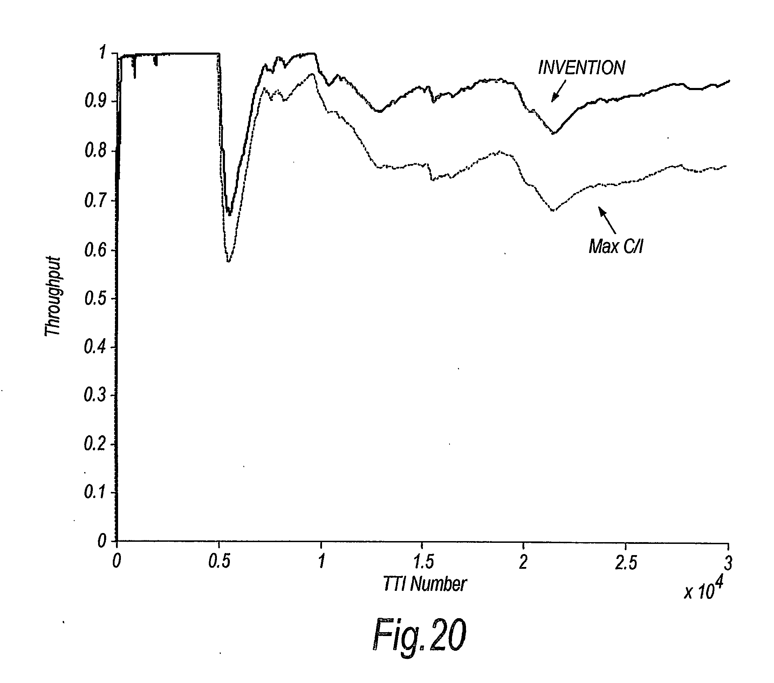

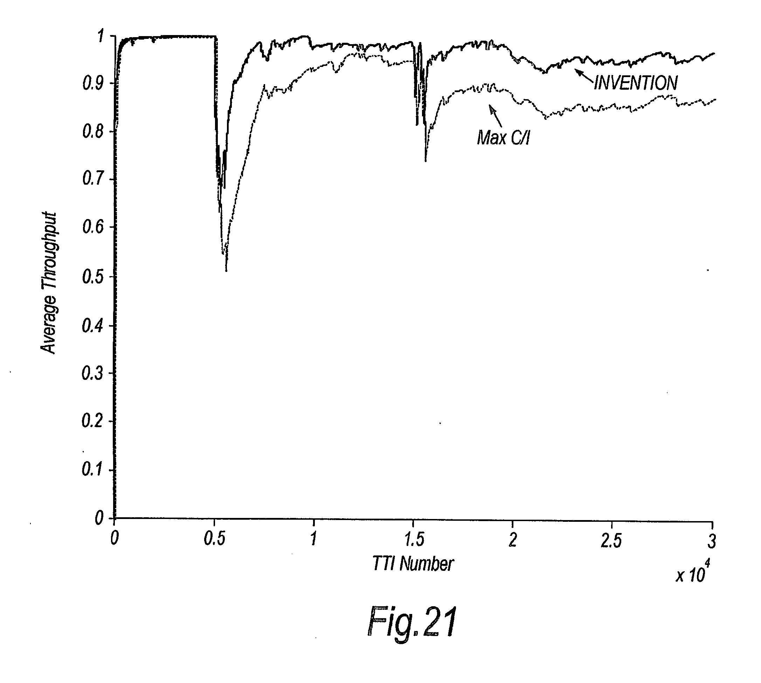

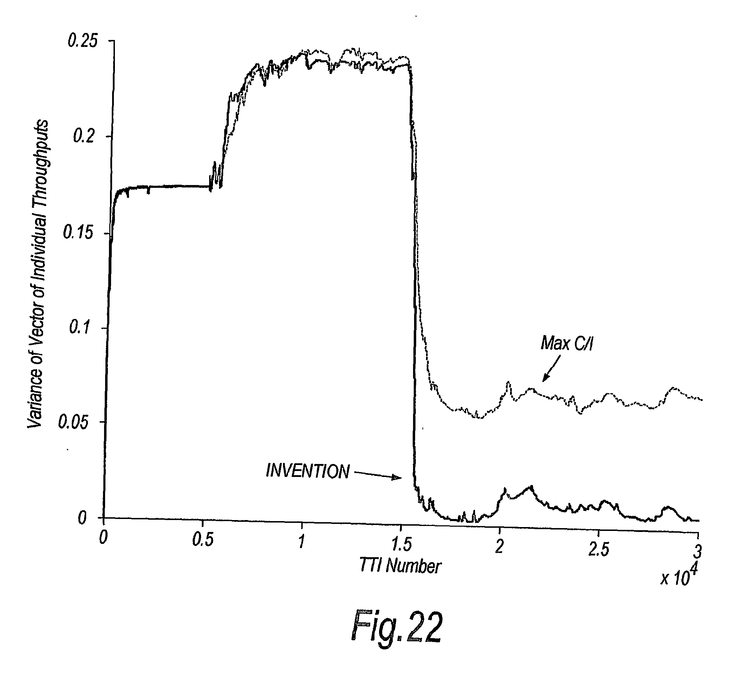

Figure 20 is a graph for comparing the overall throughput of a scheduler embodying the present invention (solid line) and the Max C/I scheduler (dotted line) in the second example (variable input load scenario). This overall throughput is the ratio of the total number of octets delivered to all of the UEs to the total number of octets received in the Node-B. Figure 21 corresponds to Figure 20 but shows the average throughput for all UEs, where the individual throughput of each UE is calculated using equation 11. Figure 22 is a graph for comparing the variance of throughputs of the different UEs. Again, Figures 20 to 22 confirm that a scheduler embodying the present invention has superior performance to that of the Max C/I scheduler over virtually the whole of the transmission period under consideration.

Table 4 below presents the performance comparisons for the second example in quantitative form, similar to Table 3 above.

**Table 4**

| Scheduling Type | FIFO Weighted Max C/I | Invention |
|---|---|---|
| Delivered Bit Rate | 1.0259 Mbps | 1.2483 Mbps |
| Average Delay | 1.9287 | 0.7793 |
| Satisfied QoS Conditions (WWW) | 0.6487 | 0.8101 |
| Satisfied QoS Conditions (Video) | 0.8175 | 0.9622 |

It has also been proposed to provide a slowing mechanism for WWW browsing in an HSDPA system. This slowing mechanism prevents the downloading of a new session unless a previous session has been successfully downloaded completely. For example, if a first web page has a link to a second web page, the slowing mechanism would not permit the second page to be downloaded until all of the first page had been successfully downloaded. Under this scenario another set of ranking weights and channel allocation weights has been found to be appropriate, as follows

$$W_{1n} = 1, \quad W_{2n} = 10, \quad W_{3n} = 1, \quad W_{4n} = 1, \quad W_{5n} = 1$$

$$V_{1n} = 1, \quad V_{2n} = 1, \quad V_{3n} = 1, \quad V_{4n} = 10, \quad V_{5n} = 1$$

.

The results obtained using this set of weights for mixed services in a third simulated example, again including real-time video and WWW browsing, are set out in Table 5 below.

**Table 5**

| Scheduling Type | FIFO Weighted Max C/I | Invention |
|---|---|---|
| Efficient Input Rate | 2.138 Mbps | 2.357 Mbps |
| Delivered Bit Rate | 1.969 Mbps | 2.32 Mbps |
| Average Delay | 4.5966 | 0.5697 |
| Satisfied QoS Conditions (WWW) | 0.6331 | 0.8658 |
| Satisfied QoS Conditions (Video) | 0.4958 | 0.8994 |

In the embodiments described above, the weights employed by the decision unit 16 have been set to particular values taking account of the expected traffic scenario. The weights are preferably adjustable by an operator of the scheduler so that when the expected traffic scenario changes the weights can be changed as well.

Even when the weights are fixed, at least for the duration of an operating session, a scheduler embodying the present invention is able effectively to adapt itself automatically to the changing traffic and channel conditions. For example, in some TTIs, the traffic and channel conditions may be such that a scheduler similar to the Max C/I scheduler would provide the best performance, while in other TTIs another kind of scheduler such as a round robin scheduler might provide the best performance. Because the different individual measures are recalculated in each TTI they change to reflect the changing traffic and channel conditions. Assume, for example, that all the UEs have similar delay, QoS and fairness profiles. Also assume that currently the amount of data waiting in Node B queues to be transmitted to the different UEs is the same. Now even with fixed weights, four of the five measures used for ranking and channel assignment will be the same. Therefore the deciding factor is the measure related to Max C/I. Any UE that has a better C/I has a better chance for transmission. Therefore the profile of the scheduler is automatically shifted towards a Max C/I scheduler.

Similarly if all the measures are the same except for fairness, the profile will be shifted to round robin scheduling. Accordingly, even when the weights applied to the individual measures in the decision unit are fixed, the scheduler effectively "surfs" automatically between different kinds of schedulers, becoming more like a Max C/I scheduler when this is appropriate and more like a round robin scheduler when that is appropriate, and so on.

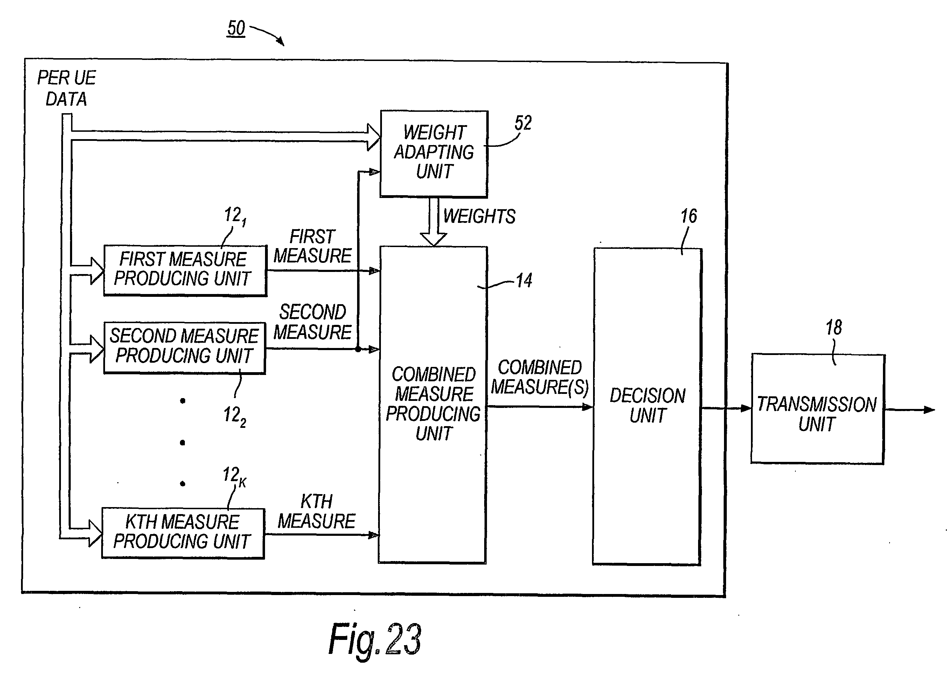

In another embodiment of the present invention, illustrated in Figure 23, the apparatus itself changes one or both of the sets of weights in a dynamic way during operation of the apparatus. The packet scheduling apparatus 50 in this embodiment is similar to that described previously with reference to Figures 3 and 4. However, the apparatus 50 further comprises a weight adapting unit 52 which is connected operatively to the combined measure producing unit 14 for applying one or more sets of weights thereto. The weight adapting unit 52 is also connected operatively to one or more of the measure producing units $12_1$ to $12_K$ (in Figure 23 just the unit $12_2$) for receiving therefrom one or more of the first to Kth individual measures of scheduling performance. The weight adapting unit 52 in this embodiment is also connected for receiving some or all of the data relating to each UE that is supplied to the measure producing units $12_1$ to $12_K$.

The weight adapting unit 52 monitors the received measure(s) and the received UE data and changes the weights on a TTI by TTI basis. For example, if the weight adapting unit 52 finds that in a certain period (eg for a few TTIs) the overall throughput profile is not satisfactory but that the fairness and/or delay profiles are good, it can set the weights such that the scheduler is transformed to use a scheduling strategy similar to that of the Max C/I scheduler, so as to boost the overall system throughput against other performance aspects. The weights could be made continuously variable, or could be selected from a limited set of available candidate weight sets according to the monitoring results.

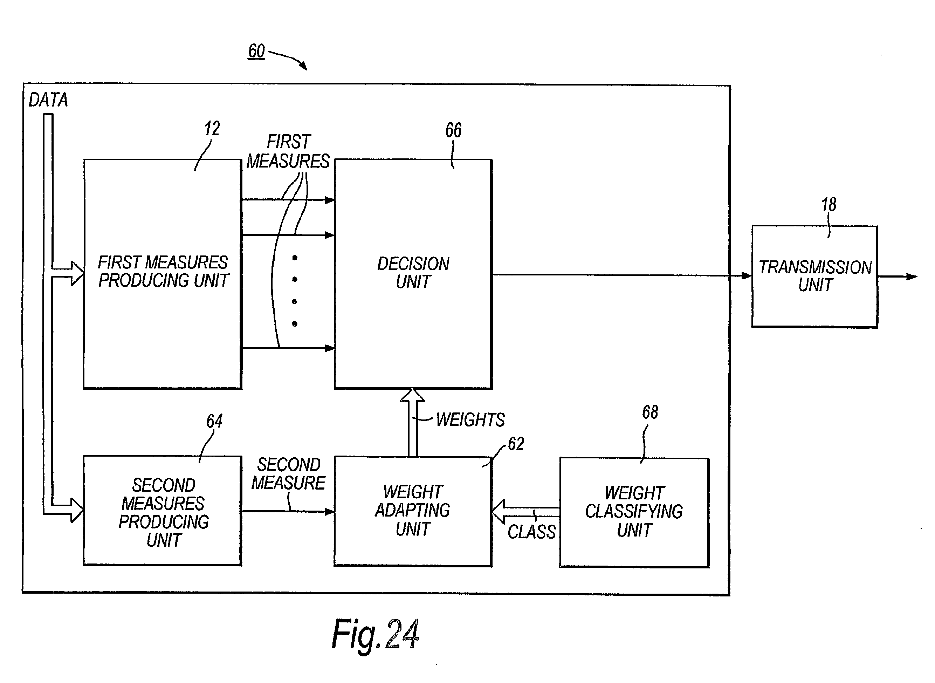

Figure 24 illustrates another embodiment of the invention in which the weights are changed in a dynamic way during operation of the apparatus.

The apparatus 60 comprises a first measures producing unit 12 (corresponding to the set of measure producing units $12_i$ to $12_k$ in Figure 23) which receives data relating to performance of the scheduling apparatus. The data may include, for example, carrier-to-interference ratio (C/I) reports and information regarding the fill levels of source queues in which the data destined for different receivers is buffered in the transmitter prior to transmission.

Based on the received data, the first measures producing unit 12 produces a set of first measures (corresponding to the first to kth measures in Figure 23) of scheduling performance. The first measures relate to at least two different aspects of the scheduling performance. For example, one of the first measures may relate to throughput, while another of the first measures may relate to delay. Such a set of the first measures is produced per receiver (UE).

The apparatus 60 further comprises a decision unit 26 which receives the set of first measures produced by the first measures producing unit 12. The decision unit 66 also receives a set of weights from a weight adapting unit 62. There is an individually-corresponding weight for each one of the first measures. The decision unit 66 (which in this embodiment includes the function of the combined measure producing unit 14 of Figure 23) produces a weighted combination of the first measures by combining the first measures according to the respective corresponding weights.

The decision unit 66 produces a weighted combination of the first measures per receiver, and compares the respective weighted combinations for different receivers to decide the receiver(s) to which packets are to be transmitted in the scheduling instant under consideration.

The apparatus 66 further comprises the weight adapting unit 62 mentioned above, a second measures producing unit 64 and a weight classifying unit 68. The second measures producing unit 64 receives some or all of the data relating to performance of the scheduling apparatus that is supplied to the first measures producing unit 12. Although not shown in Figure 24, the second measures producing unit 64 may also receive one or more of the first measures produced by the first measures producing unit 12. The second measures producing unit 64 produces at least one second measure of scheduling performance. The or each second measure relates to some aspect of overall scheduling performance, ie taking account of all the receivers collectively. For example, the second measures may relate to overall QoS, overall throughput, average throughput for different receivers, and fairness.

For the or each second measure, the weight classifying unit 68 classifies the previously-mentioned weights supplied to the decision unit 66 into at least two different classes of weights according to a probable influence the weight concerned is expected to have on the second measure. For example, the weights may be classified into friendly, hostile and neutral classes. The friendly class may be made up of each weight, if any, whose probable influence on the second measure is expected to be positive. The hostile class may be made up of each weight, if any, whose probable influence on the second measure is expected to be negative. The neutral class may be made up of each weight, if any, whose influence on the second measure is uncertain (not expected to be definitely positive or definitely negative).

The weight adapting unit 62 receives the or each second measure from the second measures producing unit 64 and also receives the information relating to the classification of the weights from the weight classifying unit 68. The weight adapting unit 62 employs the or each second measure, together with the classification of the weights for the or each second measure, to adapt the weights. For example, each weight in the friendly class for a second measure may be increased if the second measure is decreasing or unchanged. Each weight in the hostile class for a second measure may be decreased if the second measure is decreasing or not changing. Each weight in the neutral class for a second measure may be maintained unchanged irrespective of the change in the second measure.

The apparatus 60 is connected operatively to a transmission unit 18 which, when a scheduling instant occurs for which the decision unit 66 has made a scheduling decision, causes packets to be transmitted to the chosen receiver(s).

Further information regarding the detailed implementation of the Figure 24 embodiment is given in United Kingdom patent application no. 0308931.5 from which this application claims priority. PCT application no. [agent's ref P84880PC00] filed on the same date as the present application corresponds to GB 0308931.5. Copies of GB 0308931.5 and the PCT application have been filed with the present application.

It will be appreciated that the individual measures of scheduling performance which can be produced in embodiments of the present invention are by no means limited to those described hereinbefore. For example, it is possible to have one or more measures which take into account purely commercial or economic aspects such as the total price, cost, profitability or revenue of the operator of the Node-B in the wireless mobile communications network. In this way, the scheduler can take into account commercial conditions, as well as traffic and channel conditions.

It is also possible to have a measure relating specifically to fairness, for example a measure of the variance of the throughputs to different UEs.

An important advantage of packet scheduling apparatus embodying the present invention over scheduling apparatus based on genetic algorithms is reduced computational complexity. For example, compared to a basic Max C/I scheduler, a scheduler employing a genetic algorithm may have at least 20 to 100 times greater computational complexity. Thus, although schedulers employing genetic algorithms will definitely be viable in the long term as the cost of high complexity computational resources falls, in the short to medium term it is desirable to provide schedulers which do not require significantly greater computational complexity than the conventional schedulers based on Max C/I and round robin techniques.

The computational complexity of scheduling apparatus embodying the present invention is investigated below. It is assumed that the apparatus is intended to deal with N UEs, M sectors, K different individual measures of scheduling performance and C carriers. In each TTI, scheduling apparatus embodying the present invention needs to perform 7N subtract operations, (2K+5)N add operations, (4K+7)N+1 multiply operations, 8N+1 divide operations, N operations to find a maximum value, and 4N operations to find a minimum value. Also, a scheduler embodying the present invention is assumed to be required to carry out two sorting processes. Each sorting process is assumed to be a so-called "quicksort process" as described, for example, in "Numerical Recipes in C", W.H. Press et al:, Cambridge University Press, 1992. The number of operations required per TTI for each quicksort process is $2N^2$.

It is assumed that each of the above operations is equivalent to 2 multiply-accumulate cycles for a processor carrying out the operations. It is also assumed that worst-case congestion is occurring such that all UEs have non-empty source queues in each TTI, and that each value has a format of $\pm$XXXXX.XXXX. The number of million multiply accumulate cycles per second MMACS (assuming that there are 500 TTIs per second) is

$$P = 2(4N^2 + 6KN + 32N + 2) \cdot M \cdot C \cdot 500 / 10^6$$

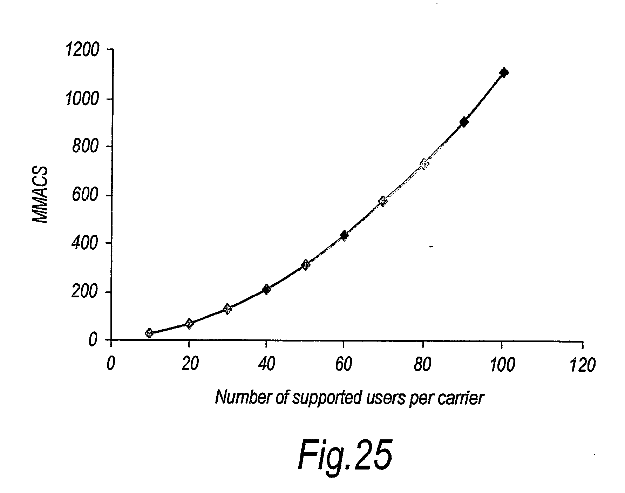

Figure 25 is a graph showing how the number of MMACS varies as N varies, assuming that there are M = 6 sectors, K = 5 dimensions and C = 4 carriers per sector. When N = 100, the number of MMACS is 1109. For a typical digital signal processor such as the Motorola MCS 8102 intended for use in 3G wireless base stations which delivers 6000 MMACs, this represents around 20% of the full processing power.

Apart from processing power requirements, memory requirements must also be considered. The total amount of memory required for each quicksort process is $2\log_2 N$. The amount of memory required for N UEs, M sectors, K individual measures and C carriers is

$$S = 4\log_2 N + 22N + 4$$

As described above, packet scheduling methods and apparatus embodying the present invention can provide a multidimensional QoS-based scheduling technique which outperforms conventional scheduling techniques. This outperformance is achieved without the need to classify the UEs according to the different services to be provided, and so avoids the problems of previously-proposed scheduling techniques involving different banks of schedulers for different services. By performing a dynamic service classification, packet scheduling methods and apparatus embodying the present invention can achieve a high degree of robustness by improving all of the aspects of the QoS provisioning. It is also possible to achieve a high level of tuning ability and flexibility to control various system parameters.

It is possible to use a packet scheduling method embodying the present invention to set some or all of the initial population of a genetic algorithm used to carry out scheduling, for example the genetic algorithm described in our co-pending United Kingdom patent publication no. GB-A-2390775.

Although an example of the present invention has been described above in relation to a wideband CDMA network having an asynchronous packet mode, it will be appreciated that the present invention can also be applied to any other networks in which a scheduling problem arises. These networks could be, or could be adapted from, other CDMA networks, such as an IS95 network. These networks could also be or be adapted from other mobile communication networks not using CDMA, for example networks using one or more of the following multiple-access techniques: time-division multiple access (TDMA), wavelength-division multiple access (WDMA), frequency-division multiple access (FDMA) and space-division multiple access (SDMA).

Although embodiments of the present invention have been described as having distinct "units", those skilled in the art will appreciate that a microprocessor or digital signal processor (DSP) may be used in practice to implement some or all of the functions of the base station (Node-B) and/or user equipment in embodiments of the present invention.

## Claims

1. A packet scheduling method, for scheduling packets of data for transmission from a transmitter via at least one channel to a plurality of receivers, which method comprises:

   producing for each individual receiver at least two different individual measures, each being a measure of scheduling performance in one or more different aspects;
   producing (S1, S3) for each individual receiver a combined measure of the scheduling performance in at least two different said aspects by combining said individual measures for the receiver concerned; and
   employing (S4) the respective combined measures for different receivers to decide the receiver(s) to which packets are to be transmitted;

   **characterised by**:

   assigning respective weightings to said at least two different scheduling-performance aspects;
   combining (S1, S3) said individual measures in accordance with said assigned weightings to produce said combined measure;
   and further **characterised in that** at least one said individual measure is independent of at least one said aspect which influences another one of said individual measures.

2. A method as claimed in claim 1, wherein said weightings are adjustable by an operator of the transmitter.

3. A method as claimed in claim 1, wherein said weightings are adjusted automatically based on the scheduling performance.

4. A method as claimed in any preceding claim, wherein, in producing the combined measure, delay in delivering data to the receiver is determined in dependence upon a difference between a worst delay currently experienced by the receiver and a tolerable delay threshold set for the receiver.

5. A method as claimed in any preceding claim, wherein in producing the combined measure throughput of data to the receiver is determined in dependence upon an amount of data delivered successfully to the receiver and on an amount of data waiting at the transmitter for transmission to the receiver.

6. A method as claimed in any preceding claim, wherein at least one said individual measure is influenced by a priority assigned individually to the receiver.

7. A method as claimed in any one of claims 1 to 5, wherein at least one said individual measure is influenced by a priority assigned to a type of service provided to the receiver.

8. A method as claimed in any preceding claim, wherein at least one said individual measure is adjusted to reduce a mismatch between it and another one of said individual measures.

9. A method as claimed in any preceding claim, wherein one or more of said individual measures are normalised.

10. A method as claimed in any preceding claim, wherein the or each said combined measure is produced by forming a product of said individual measures for the receiver concerned.

11. A method as claimed in any preceding claim, further comprising:

   producing respective first and second such combined measures (S1, S3) for each said individual receiver;
   ranking (S2) the receivers based on their respective first combined measures and forming a list of the receivers in the order in which they are ranked; and
   allocating (S4) channels to the receivers in the list, based on their respective second combined measures, starting from the highest-ranked receiver in the list.

12. A method as claimed in claim 11, wherein at least one said aspect is assigned different respective weightings for producing the first and second combined measures respectively.

13. A method as claimed in any preceding claim, wherein one of said different aspects is success or failure in delivering data to the receiver within a tolerable delay threshold.

14. A method as claimed in any preceding claim, wherein one of said different aspects is a quality of a channel between the transmitter and the receiver.

15. A method as claimed in any preceding claim, wherein one of said different aspects is how much data is estimated to be deliverable successfully to the receiver.

16. A method as claimed in any preceding claim, wherein one of said different aspects is how much data is waiting at the transmitter for transmission to the receiver.

17. A method as claimed in any preceding claim, wherein one of said different aspects is delay in delivering data to the receiver.

18. A method as claimed in any preceding claim, wherein one of said different aspects is fairness as between different receivers.

19. A method as claimed in any preceding claim, wherein one of said different aspects is a commercial aspect.

20. A method as claimed in any preceding claim, carried out iteratively for a series of scheduling instants, wherein, for each said scheduling instant, new combined measures are produced for the receivers and a new decision is made on the receiver(s) to which packets are to be transmitted.

21. A method as claimed in any preceding claim, wherein said transmission is a wireless transmission.

22. A method as claimed in any preceding claim, wherein said transmitter is part of a base station of a wireless communication system, and each said receiver is part of a user equipment of that system.

23. Packet scheduling apparatus, for scheduling packets of data for transmission from a transmitter to a plurality of receivers via at least one channel, which apparatus comprises:

   means ($12_1$, ...$12_K$; 12) for producing for each individual receiver at least two different individual measures, each being a measure of scheduling performance in one or more different aspects;
   means (14; 66) for producing for each individual receiver a combined measure of performance of the apparatus in at least two different said aspects by combining said individual measures for the receiver concerned; and
   means (16; 66) for employing the respective combined measures for different receivers to decide the receiver (s) to which packets are to be transmitted;

   **characterised by**:

   means (52; 62) for assigning weightings to said at least two different aspects of performance of the packet scheduling apparatus; and

further **characterised in that**:

the combined measure producing means (14; 66) is operable to combine said individual measures in accordance with said assigned weightings to produce said combined measure; and
at least one said individual measure is independent of at least one said aspect which influences another one of said individual measures.

24. A transmitter comprising:

packet scheduling apparatus (10; 50; 60) as claimed in claim 23; and
transmitting means (18) connected operatively to said packet scheduling apparatus and operable to cause packets to be transmitted to the receiver(s) decided by the packet scheduling apparatus.


**Patentansprüche**

1. Paketplanungsverfahren zum Planen von Datenpaketen für eine Übertragung von einem Sender über mindestens einen Kanal zu mehreren Empfängern, welches Verfahren umfasst:

Erzeugen, für jeden individuellen Empfänger, von zumindest zwei verschiedenen individuellen Maßen, wobei jedes ein Maß einer Planungsleistung in einem oder mehreren verschiedenen Aspekten ist;
Erzeugen (S1, 53), für jeden individuellen Empfänger, eines kombinierten Maßes der Planungsleistung in mindestens zwei verschiedenen Aspekten, indem die individuellen Maße für den betreffenden Empfänger kombiniert werden; und
Verwenden (54) der jeweiligen kombinierten Maße für verschiedene Empfänger, um den (die) Empfänger zu entscheiden, an den (die) Pakete gesendet werden sollen;

**gekennzeichnet durch**:

Zuweisen jeweiliger Gewichtungen zu den mindestens zwei verschiedenen Aspekten der Planungsleistung;
Kombinieren (51, 53) der individuellen Maße gemäß den zugewiesenen Gewichtungen, um das kombinierte Maß zu erzeugen;
und ferner **dadurch gekennzeichnet, dass** zumindest ein individuelles Maß von zumindest einem besagten Aspekt, der ein anderes der individuellen Maße beeinflusst, unabhängig ist.

2. Verfahren nach Anspruch 1, wobei die Gewichtungen von einem Bediener des Senders einstellbar sind.

3. Verfahren nach Anspruch 1, wobei die Gewichtungen basierend auf der Planungsleistung automatisch eingestellt werden.

4. Verfahren nach einem der vorhergehenden Ansprüche, wobei beim Erzeugen des kombinierten Maßes eine Verzögerung beim Liefern von Daten zum Empfänger In Abhängigkeit von einer Differenz zwischen einer vom Empfänger aktuell erfahrenen schlechtesten Verzögerung und einer für den Empfänger eingestellten tolerablen Verzögerungsschwelle bestimmt wird.

5. Verfahren nach einem der vorhergehenden Ansprüche, wobei beim Erzeugen des kombinierten Maßes ein Durchsatz von Daten zum Empfänger in Abhängigkeit von einer an den Empfänger erfolgreich gelieferten Datenmenge und von einer am Sender auf eine Übertragung zum Empfänger wartenden Datenmenge bestimmt wird.

6. Verfahren nach einem der vorhergehenden Ansprüche, wobei zumindest ein individuelles Maß durch eine Priorität beeinflusst wird, die dem Empfänger individuell zugewiesen wurde.

7. Verfahren nach einem der Ansprüche 1 bis 5, wobei zumindest ein individuelles Maß durch eine Priorität beeinflusst wird, die einer Art von an den Empfänger geliefertem Service zugewiesen wurde.

8. Verfahren nach einem der vorhergehenden Ansprüche, wobei zumindest ein individuelles Maß eingestellt wird, um eine Fehlanpassung zwischen ihm und einem anderen der individuellen Maße zu reduzieren.

**9.** Verfahren nach einem der vorhergehenden Ansprüche, wobei ein oder mehrere der Individuellen Maße normiert sind.

**10.** Verfahren nach einem der vorhergehenden Ansprüche, wobei das oder jedes kombinierte Maß erzeugt wird, indem ein Produkt der individuellen Maße für den betreffenden Empfänger gebildet wird.

**11.** Verfahren nach einem der vorhergehenden Ansprüche, ferner mit den Schritten:

Erzeugen jeweiliger erster und zweiter derartiger kombinierter Maße (S1, S3) für jeden individuellen Empfänger;
Erstellen einer Rangfolge (S2) der Empfänger basierend auf ihren jeweiligen ersten kombinierten Maßen und Bilden einer Liste der Empfänger in der Reihenfolge, in der sie nach Rangfolge geordnet sind; und
Zuordnen (S4) von Kanälen zu den Empfängern in der Liste, basierend auf ihren jeweiligen zweiten kombinierten Maßen, beginnend vom Empfänger mit dem höchsten Rang in der Liste.

**12.** Verfahren nach Anspruch 11, wobei zumindest ein besagter Aspekt verschiedenen jeweiligen Gewichtungen zum Erzeugen des ersten bzw. zweiten kombinierten Maßes zugewiesen wird.

**13.** Verfahren nach einem der vorhergehenden Ansprüche, wobei einer der verschiedenen Aspekte Erfolg oder Misserfolg beim Liefern von Daten an den Empfänger innerhalb einer tolerablen Verzögerungsschwelle ist.

**14.** Verfahren nach einem der vorhergehenden Ansprüche, wobei einer der verschiedenen Aspekte eine Qualität eines Kanals zwischen dem Sender und dem Empfänger ist.

**15.** Verfahren nach einem der vorhergehenden Ansprüche, wobei einer der verschiedenen Aspekte ist, wie viele Daten schätzungsweise erfolgreich an den Empfänger lieferbar sind.

**16.** Verfahren nach einem der vorhergehenden Ansprüche, wobei einer der verschiedenen Aspekte ist, wie viele Daten beim Sender auf die Übertragung zum Empfänger warten.

**17.** Verfahren nach einem der vorhergehenden Ansprüche, wobei einer der verschiedenen Aspekte eine Verzögerung beim Liefern von Daten an den Empfänger ist.

**18.** Verfahren nach einem der vorhergehenden Ansprüche, wobei einer der verschiedenen Aspekte Fairness zwischen verschiedenen Empfängern ist.

**19.** Verfahren nach einem der vorhergehenden Ansprüche, wobei einer der verschiedenen Aspekte ein kommerzieller Aspekt ist.

**20.** Verfahren nach einem der vorhergehenden Ansprüche, für eine Reihe von Planungsmomenten iterativ ausgeführt, wobei für jeden besagten Planungsmoment neu kombinierte Maße für die Empfänger erzeugt werden und eine neue Entscheidung über den (die) Empfänger getroffen wird, an den (die) Pakete gesendet werden sollen.

**21.** Verfahren nach einem der vorhergehenden Ansprüche, wobei die Übertragung eine drahtlose Übertragung ist.

**22.** Verfahren nach einem der vorhergehenden Ansprüche, wobei der Sender ein Teil einer Basisstation eines drahtlosen Kommunikationssystems ist und jeder Empfänger Teil eines Anwendergeräts dieses Systems ist.

**23.** Paketplanungsvorrichtung zum Planen von Datenpaketen für eine Übertragung von einem Sender zu mehreren Empfängern über zumindest einen Kanal, welche Vorrichtung umfasst:

Mittel ($12_1$, ..., $12_K$; 12), um für jeden individuellen Empfänger zumindest zwei verschiedene individuelle Maße zu erzeugen, wobei jedes ein Maß einer Planungsleistung in einem oder mehreren verschiedenen Aspekten ist;
Mittel (14; 66), um für jeden individuellen Empfänger ein kombiniertes Maß einer Leistung der Vorrichtung in zumindest zwei verschiedenen Aspekten zu erzeugen, indem die Individuellen Maße für den betreffenden Empfänger kombiniert werden; und
Mittel (16; 66), um die jeweiligen kombinierten Maße für verschiedene Empfänger zu verwenden, um den (die) Empfänger zu entscheiden, an den (die) Pakete gesendet werden sollen;

**gekennzeichnet durch**:

Mittel (52; 62), um den zumindest zwei verschiedenen Aspekten einer Leistung der Paketplanungsvorrichtung Gewichtungen zuzuweisen; und

ferner **dadurch gekennzeichnet, dass**:

das kombinierte Maße erzeugende Mittel (14; 66) betreibbar ist, um die Individuellen Maße gemäß den zugewiesenen Gewichtungen zu kombinieren, um das kombinierte Maß zu erzeugen;
zumindest ein individuelles Maß von zumindest einem Aspekt, der ein anderes der Individuellen Maße beeinflusst, unabhängig ist.

**24.** Sender, mit:

Paketplanungsvorrichtung (10, 50; 60) nach Anspruch 23; und
Sendemittel (18), das mit der Paketplanungsvorrichtung wirksam verbunden und betreibbar ist, um zu veranlassen, dass Pakete an den (die) Empfänger(n) gesendet werden, der (die) durch die Paketplanungsvorrichtung entschieden wurde(n).

## Revendications

**1.** Procédé d'ordonnancement de paquets, destiné à ordonnancer des paquets de données en vue d'une transmission depuis un émetteur via au moins un canal vers une pluralité de récepteurs, ledit procédé comprenant :

la production, pour chaque récepteur individuel, d'au moins deux mesures individuelles différentes, étant chacune une mesure de performances d'ordonnancement selon un ou plusieurs aspect(s) ;
la production (S1, S3), pour chaque récepteur individuel, d'une mesure combinée des performances d'ordonnancement selon au moins deux desdits aspects différents en combinant lesdites mesures individuelles pour le récepteur concerné ; et
l'utilisation (S4) des mesures combinées respectives pour différents récepteurs afin de décider du/des récepteur (s) vers lequel/lesquels les paquets doivent être transmis ;

**caractérisé par** :

l'attribution de pondérations respectives auxdits au moins deux aspects différents de performances d'ordonnancement ;
la combinaison (S1, S3) desdites mesures individuelles selon lesdites pondérations attribuées afin de produire ladite mesure combinée ;
et **caractérisé en outre en ce qu'**au moins l'une desdites mesures individuelles est indépendante d'au moins l'un desdits aspects qui influence une autre desdites mesures individuelles.

**2.** Procédé selon la revendication 1, dans lequel lesdites pondérations sont ajustables par un opérateur de l'émetteur.

**3.** Procédé selon la revendication 1, dans lequel lesdites pondérations sont ajustées automatiquement sur la base des performances d'ordonnancement.

**4.** Procédé selon l'une quelconque des revendications précédentes, dans lequel, lors de la production de la mesure combinée, le retard de remise des données au récepteur est déterminé selon une différence entre un retard qui est le pire actuellement subi par le récepteur et un seuil de retard tolérable défini pour le récepteur.

**5.** Procédé selon l'une quelconque des revendications précédentes, dans lequel, lors de la production de la mesure combinée, le débit des données vers le récepteur est déterminé selon une quantité de données délivrée avec succès au récepteur et selon une quantité de données attendant au niveau de l'émetteur en vue d'une transmission vers le récepteur.

**6.** Procédé selon l'une quelconque des revendications précédentes, dans lequel au moins l'une desdites mesures individuelles est influencée par une priorité attribuée individuellement au récepteur.

**7.** Procédé selon l'une quelconque des revendications 1 à 5, dans lequel au moins l'une desdites mesures individuelles est influencée par une priorité attribuée à un type de service fourni au récepteur.

8. Procédé selon l'une quelconque des revendications précédentes, dans lequel au moins l'une desdites mesures individuelles est ajustée afin de réduire un écart entre celle-ci et une autre desdites mesures individuelles.

9. Procédé selon l'une quelconque des revendications précédentes, dans lequel une ou plusieurs desdites mesures individuelles est/sont normalisée(s).

10. Procédé selon l'une quelconque des revendications précédentes, dans lequel la ou chacune desdites mesures combinées est produite en formant un produit desdites mesures individuelles pour le récepteur concerné.

11. Procédé selon l'une quelconque des revendications précédentes, comprenant en outre :

    la production d'une première et d'une seconde mesures combinées respectives (S1, S3) pour chacun desdits récepteurs individuels ;
    le classement (S2) des récepteurs sur la base de leurs premières mesures combinées respectives et la formation d'une liste des récepteurs dans l'ordre dans lequel ils sont classés ; et
    l'attribution (S4) de canaux aux récepteurs de la liste, sur la base de leurs secondes mesures combinées respectives, en commençant par le récepteur le plus élevé dans la liste.

12. Procédé selon la revendication 11, dans lequel au moins l'un desdits aspects se voit attribuer différentes pondérations respectives afin de produire les premières et les secondes mesures combinées, respectivement.

13. Procédé selon l'une quelconque des revendications précédentes, dans lequel l'un desdits aspects différents est une réussite ou un échec de remise des données au récepteur dans le cadre d'un seuil de retard tolérable.

14. Procédé selon l'une quelconque des revendications précédentes, dans lequel l'un desdits aspects différents est une qualité d'un canal entre l'émetteur et le récepteur.

15. Procédé selon l'une quelconque des revendications précédentes, dans lequel l'un desdits aspects différents est la quantité de données qui est estimée comme pouvant être remise avec succès au récepteur.

16. Procédé selon l'une quelconque des revendications précédentes, dans lequel l'un desdits aspects différents est la quantité de données qui attend au niveau de l'émetteur en vue d'une transmission vers le récepteur.

17. Procédé selon l'une quelconque des revendications précédentes, dans lequel l'un desdits aspects différents est un retard de remise des données au récepteur.

18. Procédé selon l'une quelconque des revendications précédentes, dans lequel l'un desdits aspects différents est une fidélité entre les différents récepteurs.

19. Procédé selon l'une quelconque des revendications précédentes, dans lequel l'un desdits aspects différents est un aspect commercial.

20. Procédé selon l'une quelconque des revendications précédentes, effectué de manière itérative pour une série d'instants d'ordonnancement, dans lequel, pour chacun desdits instants d'ordonnancement, de nouvelles mesures combinées sont produites pour les récepteurs et une nouvelle décision est prise quant au(x) récepteur(s) vers lequel/lesquels les paquets doivent être transmis.

21. Procédé selon l'une quelconque des revendications précédentes, dans lequel ladite transmission est une transmission sans fil.

22. Procédé selon l'une quelconque des revendications précédentes, dans lequel ledit émetteur fait partie d'une station de base d'un système de communication sans fil, et chacun desdits récepteurs fait partie d'un équipement utilisateur de ce système.

23. Appareil d'ordonnancement de paquets, destiné à ordonnancer des paquets de données en vue d'une transmission entre un émetteur et une pluralité de récepteurs via au moins un canal, ledit appareil comprenant :

des moyens ($12_1$, ..., $12_K$ ; 12) destinés à produire, pour chaque récepteur individuel, au moins deux mesures individuelles différentes, étant chacune une mesure de performances d'ordonnancement selon un ou plusieurs aspect(s) ;

des moyens (14 ; 66) destinés à produire, pour chaque récepteur individuel, une mesure combinée de performances de l'appareil selon au moins deux desdits aspects différents, en combinant lesdites mesures individuelles pour le récepteur concerné ; et

des moyens (16 ; 66) destinés à utiliser les mesures combinées respectives pour différents récepteurs afin de décider du/des récepteur(s) vers lequel/lesquels les paquets doivent être transmis ;

**caractérisé par** :

des moyens (52 ; 62) destinés à attribuer des pondérations auxdits au moins deux aspects de performances différents de l'appareil d'ordonnancement de paquets ; et

**caractérisé en outre en ce que** :

les moyens de production de mesures combinées (14 ; 66) sont capables de combiner lesdites mesures individuelles selon lesdites pondérations attribuées afin de produire ladite mesure combinée ; et

au moins l'une desdites mesures individuelles est indépendante d'au moins l'un desdits aspects qui influence une autre desdites mesures individuelles.

**24.** Emetteur comprenant :

un appareil d'ordonnancement de paquets (10 ; 50 ; 60) selon la revendication 23 ; et

des moyens de transmission (18) reliés de manière opérationnelle audit appareil d'ordonnancement de paquets et capables de provoquer le fait que les paquets soient transmis au(x) récepteur(s) décidé(s) par l'appareil d'ordonnancement de paquets.

C7-C10

UE2

1

C3-C6

2 BS

UE11

C1,C2

UE50

Fig.1

| | TTI 1 | TTI 2 | TTI 3 | TTI 4 | TTI 5 | TTI 6 | TTI 7 | TTI 8 | TTI 9 |
|---|---|---|---|---|---|---|---|---|---|
| Node B 1 Channel Code 1 | UE50 Packet 1 | UE1 Packet 1 | UE3 Packet 1 | UE23 Packet 1 | UE4 Packet 2 | UE6 Packet 1 | UE1 Packet 1 | UE23 Packet 1 | UE7 Packet 1 |
| Node B 1 Channel Code 2 | UE50 Packet 2 | UE50 Packet 3 | UE4 Packet 1 | UE1 Packet 2 | UE7 Packet 1 | UE50 Packet 2 | UE4 Packet 1 | UE1 Packet 2 | UE17 Packet 1 |
| Node B 1 Channel Code 3 | UE11 Packet 1 | UE50 Packet 4 | UE1 Packet 1 | UE4 Packet 2 | UE23 Packet 2 | UE2 Packet 8 | UE11 Packet 4 | UE15 Packet 1 | UE23 Packet 2 |
| Node B 1 Channel Code 4 | UE11 Packet 2 | UE50 Packet 5 | UE50 Packet 10 | UE11 Packet 8 | UE16 Packet 2 | UE9 Packet 2 | UE40 Packet 2 | UE34 Packet 1 | UE9 Packet 3 |
| Node B 1 Channel Code 5 | UE11 Packet 3 | UE2 Packet 5 | UE16 Packet 1 | UE9 Packet 1 | UE11 Packet 3 | UE24 Packet 2 | UE43 Packet 2 | UE16 Packet 1 | UE11 Packet 10 |
| Node B 1 Channel Code 6 | UE11 Packet 4 | UE11 Packet 5 | UE2 Packet 6 | UE1 Packet 3 | UE4 Packet 1 | UE11 Packet 9 | UE40 Packet 3 | UE11 Packet 5 | UE4 Packet 1 |
| Node B 1 Channel Code 7 | UE2 Packet 1 | UE50 Packet 6 | UE50 Packet 11 | UE3 Packet 2 | UE24 Packet 1 | UE2 Packet 8 | UE38 Packet 1 | UE38 Packet 5 | UE50 Packet 14 |
| Node B 1 Channel Code 8 | UE2 Packet 2 | UE50 Packet 7 | UE50 Packet 12 | UE11 Packet 9 | UE43 Packet 1 | UE4 Packet 3 | UE38 Packet 2 | UE3 Packet 2 | UE14 Packet 1 |
| Node B 1 Channel Code 9 | UE2 Packet 3 | UE50 Packet 8 | UE11 Packet 6 | UE40 Packet 1 | UE50 Packet 13 | UE3 Packet 1 | UE38 Packet 3 | UE40 Packet 1 | UE43 Packet 2 |
| Node B 1 Channel Code 10 | UE2 Packet 4 | UE50 Packet 9 | UE11 Packet 7 | UE50 Packet 13 | UE2 Packet 7 | UE43 Packet 2 | UE38 Packet 4 | UE50 Packet 14 | UE2 Packet 9 |

*Fig.2*

EP 1 595 368 B1

Fig. 3

EP 1 595 368 B1

START

FOR EACH UE CALCULATE A FIRST
COMBINED MEASURE BASED ON A
FIRST WEIGHTED COMBINATION
OF THE FIRST TO KTH MEASURES

S1

RANK THE UEs BASED ON THE FIRST
COMBINED MEASURES AND PRODUCE
A LIST OF THE UEs BY RANK

S2

FOR EACH UE CALCULATE A SECOND
COMBINED MEASURE BASED ON A
SECOND WEIGHTED COMBINATION
OF THE FIRST TO KTH MEASURES

S3

STARTING FROM THE TOP OF THE LIST,
ALLOCATE CHANNELS TO THE UEs
BASED ON THE SECOND
COMBINED MEASURES

S4

END

Fig.4

| FIRST STEP | | | | | |
|---|---|---|---|---|---|
| RANK | UE NO. | CHANNEL ALLOCATION MEASURE | NORMALISED | NO. CH. | ROUNDED |
| | | | | | |
| 1 | 30 | 1.5 | 0.12 | 1.23 | 1 |
| 2 | 2 | 4.3 | | | |
| 3 | 9 | 1.2 | | | |
| 4 | 11 | 2 | | | |
| 5 | 17 | 3.2 | | | |
| | | | | | |
| SUM | | 12.2 | | | |
| LEFT | | | | | 9 |
| SECOND STEP | | | | | |
| RANK | UE NO. | CHANNEL ALLOCATION MEASURE | NORMALISED | NO. CH. | ROUNDED |
| | | | | | |
| 1 | 30 | | | | |
| 2 | 2 | 4.3 | 0.40 | 3.62 | 3 |
| 3 | 9 | 1.2 | | | |
| 4 | 11 | 2 | | | |
| 5 | 17 | 3.2 | | | |
| | | | | | |
| SUM | | 10.7 | | | |
| LEFT | | | | | 6 |
| THIRD STEP | | | | | |
| RANK | UE NO. | CHANNEL ALLOCATION MEASURE | NORMALISED | NO. CH. | ROUNDED |
| | | | | | |
| 1 | 30 | | | | |
| 2 | 2 | | | | |
| 3 | 9 | 1.2 | 0.19 | 1.13 | 1 |
| 4 | 11 | 2 | | | |
| 5 | 17 | 3.2 | | | |
| | | | | | |
| SUM | | 6.4 | | | |
| LEFT | | | | | 5 |
| FOURTH STEP | | | | | |
| RANK | UE NO. | CHANNEL ALLOCATION MEASURE | NORMALISED | NO. CH. | ROUNDED |
| | | | | | |
| 1 | 30 | | | | |
| 2 | 2 | | | | |
| 3 | 9 | | | | |
| 4 | 11 | 2 | 0.38 | 1.92 | 1 |
| 5 | 17 | 3.2 | | | |
| | | | | | |
| SUM | | 5.2 | | | |
| LEFT | | | | | 4 |
| FIFTH STEP | | | | | |
| RANK | UE NO. | CHANNEL ALLOCATION MEASURE | NORMALISED | NO. CH. | ROUNDED |
| | | | | | |
| 1 | 30 | | | | |
| 2 | 2 | | | | |
| 3 | 9 | | | | |
| 4 | 11 | | | | |
| 5 | 17 | 3.2 | 1.00 | 4.00 | 4 |
| | | | | | |
| SUM | | 3.2 | | | |
| LEFT | | | | | 0 |

## Fig.5

WWW Download Packets

Internet

Application Receiver Buffer

HSDPA

Video RTP Packets

Fig.6

Fig.7

*Fig. 8*

Fig.9

Fig.10

Fig.11

Fig.12

Fig.13

$x10^5$

Fig.14

$x10^5$

Delivered octets to Node B
queue for UE 18

Total transmitted and
retransmitted octets for UE 18

Error free delivered
octets for UE 18

Fig.15

Time (Sec)

UE Number

*Fig.16*

Fig.17

*Fig.18*

EP 1 595 368 B1

Fig.19

Fig.20

Fig.21

EP 1 595 368 B1

Fig.22

*Fig.23*

Fig.24

EP 1 595 368 B1

*Fig.25*